# EUROPÄISCHE PATENTSCHRIFT

(11) **EP 0 741 761 B1**
(45) Veröffentlichungstag und Bekanntmachung des Hinweises auf die Patenterteilung: **10.09.1997**
(21) Anmeldenummer: 95907620.9
(22) Anmeldetag: 26.01.1995
(51) Int. Cl.: C08L 1/02, C08L 3/02, B65D 65/46, C08L 97/02

(54) **VERFAHREN ZUR HERSTELLUNG VON FORMKÖRPERN AUS BIOLOGISCH ABBAUBAREM MATERIAL UND FORMKÖRPER**
PROCESS FOR PRODUCING MOLDINGS FROM BIODEGRADABLE MATERIAL, AND MOLDINGS
PROCEDE DE PRODUCTION DE CORPS MOULES A PARTIR D'UN MATERIAU BIODEGRADABLE ET CORPS MOULES AINSI PRODUITS

(30) Priorität: 27.01.1994 DE 4402284
(43) Veröffentlichungstag der Anmeldung: 13.11.1996
(73) Patentinhaber: Rapido Waagen- und Maschinenfabrik GmbH, 01445 Radebeul (DE)
(72) Erfinder: ARNOLD, Gerd, D-01259 Dresden (DE); STEIGER, Hans-Jürgen, D-01259 Dresden (DE); GASS, Christian, D-01237 Dresden (DE); WISSMÜLLER, Friedrich, D-90592 Schwarzenbruck (DE); BÜTTNER, Erhard, D-01445 Radebeul (DE); MELZER, Wolfgang, D-01458 Medingen (DE); SCHÖNBERG, Brunhilde, D-01445 Radebeul (DE); DUBBERT, Frank, D-01468 Reichenberg (DE); KÖBLITZ, Thomas, D-26136 Varel (DE)
(74) Vertreter: Grünecker, Kinkeldey, Stockmair & Schwanhäusser Anwaltssozietät
(86) Internationale Anmeldenummer: EP9500285
(87) Internationale Veröffentlichungsnummer: WO9520628

(56) Entgegenhaltungen:
- WO-A-94/18384
- DE-A- 3 813 984
- DE-A- 4 009 408
- DE-C- 4 135 330
- GB-A- 632 911
- US-A- 4 377 440
- PATENT ABSTRACTS OF JAPAN vol. 18, no. 292 (M-1615) 3. Juni 1994 & JP,A,60 056 172 (HONDA MOTOR CO LTD) 1. März 1994

## Beschreibung

Die Erfindung betrifft ein Verfahren zur Herstellung von Formkörpern, insbesondere Verpackungsformkörpern, aus biologisch abbaubarem Material sowie einen Formkörper nach diesem Verfahren. Insbesondere betrifft die Erfindung ein Verfahren zur Herstellung von Formkörpern zur Verwendung als recyclefähige, biologisch abbaubare Verpackungen, die biologisch abbaubares Fasermaterial enthalten.

In Haushalt und Industrie fallen in großer Menge Altpapier sowie zellulosefaser- und stärkehaltige Produktionsrückstände in großer Menge an. Aus Gründen des Umweltschutzes und der Schonung natürlicher Ressourcen wird in steigendem Umfang auch recyceltes Altpapier als Ausgangsmaterial für die Papierherstellung wiederverwendet.

Andererseits besteht das dringende Bedürfnis, insbesondere im Verpackungsbereich, aber auch auf anderen Gebieten Formkörper zu verwenden, die die Abfallwirtschaft nur in geringem Maße beanspruchen, die zur Wiederverwertung aufschließbar (recyclebar) sind und z.B. im Rahmen der Kompostierung im wesentlichen rückstandsfrei biologisch abbaubar sind. Altpapier sowie zellulosefaser- und stärkehaltige Produktionsrückstände, wie z.B. Holz- oder Papierschliff wie auch entfärbtes Altpapier (Deinking-Material) kommen daher auch als Grundstoffe für die Herstellung von Formkörpern als Verpackungsmittel in Betracht. Bei der Verpackung von Lebensmitteln werden aus recyceltem Altpapier hergestellt Produkte einer speziellen Oberflächenbehandlung unterworfen, um den hygienischen Anforderungen zu genügen. Bei ausschließlicher Verwendung von unverschutztem Altpapier aus der industriellen Verarbeitung kann eine solche Behandlung bei Einhaltung von gesetzlich festgelegten Produktions-Rahmenbedingungen entfallen.

Es sind daher flache Schalen oder Deckel aus Karton, der unter ausschließlicher oder teilweiser Verwendung von Altpapier hergestellt wurde, bekannt. Dieser Karton wird gestanzt und durch entsprechende Stempel verformt. Der erzielbaren Formenvielfalt werden durch die Materialbeschaffenheit allerdings enge Grenzen gesetzt, da Karton nur sehr bedingt verformbar ist.

Zur Vermeidung dieses Nachteils werden in zunehmendem Maße geformte Verpackungen nach dem Faserguß-Verfahren hergestellt, das auf den Grundlagen der konventionellen Papierherstellung basiert. Dabei werden Fasersuspensionen aus zerkleinertem Altpapier und Wasser bereitet und auf Formsiebe gegeben. Anschließend wird das Wasser entzogen und der Formling getrocknet, gegebenenfalls kann er auch einer verdichtenden Preßbehandlung unterzogen werden. Nachteilig ist hierbei, daß die Durchführung dieses Verfahrens, wie es beispielsweise aus der DE 40 35 887 bekannt ist, sehr aufwendig ist und durch den hohen Wasserbedarf die Umwelt belastet. Auch in der jüngsten Zeit hat es nicht an Versuchen gefehlt, geformte Verpackungen, die aus Kunststoff gefertigt werden und insbesondere für die Verpackung von Lebensmitteln geeignet sind, durch Produkte auf der Basis von Altpapier zu ersetzen.

So ist aus der DE-OS 39 23 497 die Herstellung einer mehrschichtigen Verpackungsschale für Lebensmittel bekannt, deren Trägerschicht überwiegend aus Recycling-Material auf der Basis von Altpapier besteht. Als Bindemittel ist hierbei ein Anteil an geschäumtem Kunststoff notwendig. Die Herstellung solcher Verpackungsschalen erfordert ein verhältnismäßig aufwendiges, mehrstufiges Verfahren, bei dem zerkleinertes Altpapiermaterial über einen Extruder zu einer bahnförmigen Trägerschicht geführt und anschließend im Verbund mit einer Deckschicht durch Tiefziehen bzw. Pressen zu Verpackungsschalen geformt wird. Während der Herstellung muß eine gesteuerte, dosierte Zugabe von Kunststoffgranulaten als Bindemittel in der Trägerschicht erfolgen. Aufgrund des Kunststoffeinsatzes besteht eine solche Verpackungsschale in nachteiliger Weise nicht aus vollständig verrottbarem, organischem Material. Überdies ist die Herstellung aufgrund der aufwendigen Verfahrensführung kostenintensiv.

Verpackungen auf Waffelteigbasis, sowohl als eßbare Verpackungen als auch, in Abhängigkeit von den verwendeten Zuschlagstoffen, als nicht-eßbare Verpackungen, sind ebenfalls bekannt (EP 513 106). Schwierigkeiten bestehen hierbei hinsichtlich der Langlebigkeit, Elastizität, Bruchfestigkeit und Haltbarkeit solcher Verpackungen.

Es ist schließlich auch bekannt, geformtes Verpackungsmaterial im wesentlichen auf Stärkebasis unter Verwendung von modifizierter Stärke unter Aufschmelzung der Stärke und anschließender Extrusion und Abkühlung herzustellen (EP 0 304 401 B1). Die Prokukteigenschaften des so gewonnenen Verpackungsmateriales sind allerdings für viele Zwecke aufgrund der doch verhältnismäßig niedrigen Bruchfestigkeit von Verpackungen auf Stärkebasis nicht vollständig zufriedenstellend.

Der Erfindung liegt daher die Aufgabe zugrunde, ein Verfahren zur Herstellung von Formkörpern aus biologisch abbaubarem Material und einen solchen Formkörper anzugeben, das in kostengünstiger und einfacher Weise durchführbar ist und zu einem Formkörper, insbesondere für Verpackungszwecke, aus vollständig verrottbarem, biologisch abbaubarem Material führt, der sich durch eine hohe Oberflächengüte und geringe Porigkeit, strukturelle Festigkeit und Elastizität auszeichnet.

Diese Aufgabe wird erfindungsgemäß durch das Verfahren gemäß Anspruch 1 bzw. den Formkörper gemäß Anspruch 43 gelöst. Vorzugsweise wird das biologisch abbaubare Fasern enthaltende Rohmaterial, wie z.B. Altpapier, auf seine Faserstruktur zurückgeführt und mit Wasser sowie Stärke zu einer viskosen Masse egalisiert, die in eine Backform gegeben und unter Ausbildung eines Fasermaterial-Stärke-Verbundes gebacken wird.

Erfindungsgemäß besteht der Formkörper, vorzugsweise hergestellt nach vorerläuterten Verfahren, insbesondere als biologisch abbaubarer Verpackungs-Formkörper, aus biologisch abbaubarem Fasermaterial, das mit Stärke zu einem Fasermaterial-Stärke-Verbund aufgrund der Verkleisterung der Stärke verfestigt ist, und einem Restanteil Wasser.

In Abhängigkeit von den verwendeten Ausgangsmaterialien, d.h. dem faserhaltigen Rohmaterial bzw. der Art der biologisch abbaubaren Fasern, die auch unmittelbar verwendet werden können, und dem vorgesehenen Einsatzzweck sowie in Abhängigkeit von der Verpackungsgestalt (Formtiefe während des Backprozesses) ergibt sich ein variables Feld von Prozeßparametern sowohl hinsichtlich der Mischungsverhältnisse der Einsatzstoffe Wasser, biologisch abbaubares Fasermaterial und Stärke, sowie der verwendeten Zerkleinerungs-Egalisierung und Backtechnologie.

Nach einer bevorzugten Ausführungsform des erfindungsgemäßen Verfahrens kann dieses mit einem verhältnismäßig hohen Anteil an Fasermaterial, d.h. an Altpapier und zellulosefaser- und stärkehaltigen Produktionsrückständen, bzw. anderen biologisch abbauren Fasermaterialquellen, wie z.B. Rübenschnitzel, verwendet werden, wobei dennoch hervorragende Produkteigenschaften der auf dieser Weise hergestellten Formkörper als Verpackungsmaterialien erreicht werden. Die Formkörper bzw. das so hergestellte Verpackungsmaterial sind rasch biologisch abbaubar und können ohne großen Aufwand recycelt werden. Die Verwendung von Altpapier und zellulosefaser- und stärkehaltigen Produktionsrückständen, wie z.B. Holz- und Papierschliff, Rübenschnitzeln oder dergl. führt auch schon bei verhältnismäßig geringem Stärkeanteil unter Endverarbeitung der egalisierten, viskosen Masse in einer abschließenden Back-Verfahrensstufe, die Elemente der Waffelbacktechnologie nutzt, zu einem überraschend hochwertigen, und durch die Ausbildung eines Fasermaterial-Stärke-Verbundes auch äußerst haltbaren, dabei elastischen Formkörper, insbesondere für Verpackungszwecke, bei zugleich kostengünstiger und umweltschonender Herstellung.

Bevorzugte Ausgestaltungen des erfindungsgemäßen Verfahrens sowie von Kompositionen des Formkörpers sind in den Unteransprüchen dargestellt.

Die Erfindung wird nachstehend anhand von Ausführungsbeispielen und zugehörigen Zeichnungen näher erläutert. In diesen zeigen:
- Fig. 1: ein Ablaufdiagramm des Verfahrens zur Formkörperherstellung auf der Grundlage des Einsatzes von Altpapier als faserhaltigem Rohmaterial,
- Fig. 2: ein Ablaufdiagramm eines weiteren Ausführungsbeispieles zur Formkörperherstellung auf der Grundlage der Verwendung von bereits vorzerkleinertem, entfärbtem Altpapiermaterial (Deinking-Material),
- Fig. 3: ein Ablaufdiagramm für ein weiteres Ausführungsbeispiel eines Verfahrens zur Formkörperherstellung auf der Basis der Verwendung von Produktionsabfällen als faserhaltigem Rohmaterial, wie Papierschliff, Rübenschnitzel, Holzschliff etc.,
- Fig. 4: eine Tabelle für verschiedene Probenmuster mit unterschiedlichem Einsatz nativer Stärke und konstantem Wasseranteil, bezogen jeweils auf die Trockenmasse des Fasermateriales,
- Fig. 5: eine Tabelle für verschiedene Probenmuster mit unterschiedlichem Einsatz nativer Stärke sowie vorverkleisterter Stärke bei konstantem Wasseranteil, bezogen jeweils auf die Trockenmasse des Fasermateriales,
- Fig. 6: eine Tabelle und eine entsprechende grafische Darstellung der Klassierungen der Länge des verwendeten Fasermateriales,
- Fig. 7: ein Druck-Zeit-Diagramm für einen Backvorgang zur Herstellung eines Formkörpers nach einem der vorgenannten Verfahren,
- Fig. 8: eine Tabelle zur Produktbewertung von Formkörpern in Abhängigkeit von der Formtiefe der verwendeten Backform und in Abhängigkeit von klassiertem Fasermaterial,
- Fig. 9: eine Tabelle zur Produktbewertung von Formkörpern in Abhängigkeit von der Formtiefe der verwendeten Backform und in Abhängigkeit von Fasermaterialgemischen mit unterschiedlicher Länge der Fasern bzw. Faserbündel,
- Fig. 10: eine Rezepturtabelle für die Herstellung von Formkörpern auf der Basis von Altpapier als faserhaltigem Rohmaterial, und
- Fig.11 bis 14: verschiedene Ausführungsformen von Formkörpern, die nach Ausführungsbeispielen des erfindungsgemäßen Verfahrens hergestellt wurden.

Im Rahmen der vorliegenden Anmeldung wird der Begriff Fasermaterial oder Faserstruktur sowohl für die Aufschließung bis auf Einzelfasern als auch für das Aufschließen bis auf lediglich verhältnismäßig große Faserbündel des faserhaltigen Rohmateriales verwendet.

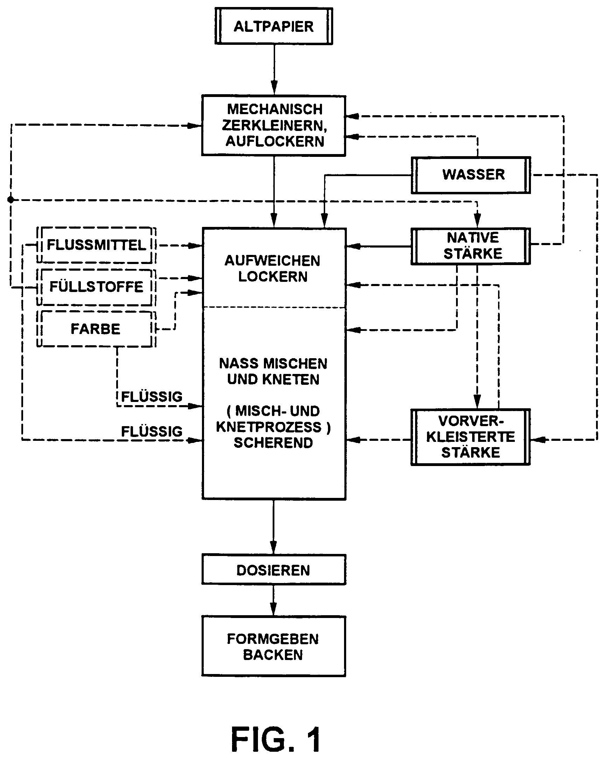

Fig. 1 verdeutlicht ein erstes Ausführungsbeispiel des Verfahrens zur Herstellung von Verpackungsformkörpern auf der Basis von Altpapier.

Dabei sind in Fig. 1 gegebenenfalls zusätzlich vorgesehene Einsatzmaterialien (z.B. vorverkleisterte Stärke, Füllstoffe, Fußmittel, Farbe) oder die Zugabe der Einsatzmaterialien in alternativen Prozeßstufen oder kombinatorisch zu den in Vollinien dargestellten Verwendungsmöglichkeiten durch unterbrochene Linien dargestellt.

In einem ersten Verfahrensschritt wird das Altpapier in trockenem Zustand zerkleinert, wobei diese Zerkleinerung vorzugsweise schonend und nicht-schneidend, sondern z.B. durch Shredder, Häcksler oder Schlagmühlen, wie Stift- oder Hammermühlen erfolgen soll, so daß im wesentlichen die Papierfasern nicht angeschnitten werden, da dies zu einer wesentlich erhöhten Wasseraufnahme im anschließenden Prozeß durch die dann erhöhte Saugfähigkeit der Zellulosefasern des Altpapiers führt. Der Zerkleinerungsvorgang soll zerreißend zu Altpapierschnitzeln in einer Größenordnung von bis zu ca. 10 mm, vorzugsweise bis zu ca. 5 mm, führen. Für dickwandige und/oder großflächige Formkörper können zur Verbesserung der Eigenstabilität Fasern oder bevorzugt gelockerte Faserbündel bis zu 50 mm Faser- bzw. Faserbündellänge verwendet werden. Auch für diesen Anwendungsfall wird bevorzugt ein Gemisch aus längeren Fasern oder Faserbündeln im Bereich von 10 mm bis 50 mm mit kurzen Fasern oder Faserbündeln im Bereich von 0,5 mm bis 20 mm verwendet.

Bei Verwendung längerer Faserbündel sinkt der vorbereitende Zerkleinerungsaufwand entsprechend.

Wie auch bei den übrigen erläuterten Ausführungsbespielen, führt die bevorzugte Auflockerung der Faserbündel zu einer innigeren Verbindung mit der verkleisternden Stärke, die in die Formbündel-Hohlräume eindringen kann, so daß die Ausbildung eines Faser/Faserbündel-Gerüstes (untereinander "vernetzte" Fasern/Faserbündel) durchdringen und überlagert von einer Stärke-matrix gefördert und ermöglicht wird, die zu einer hervorragenden inneren Bindung unter den Gegebenheiten eines Wasserdampf unter Druck freisetzenden Backprozesses führt.

Der Zerkleinerungsprozeß wird vorzugsweise so geführt, daß es zu einer Auflockerung der von dem Zerkleinerungsprozeß betroffenen Faserbündel der Altpapierschnitzel kommt.

Das auf diese Weise schonend zerkleinerte, im wesentlichen zerrissene Altpapier wird zum Aufschließen seiner Faserstruktur sodann unter Wasserzugabe und unter Aufweichen und weiterer Lockerung in einem Misch- und Knetprozeß zerfasert und zu einer viskosen Masse egalisiert. In Abhängigkeit von den Qualitätsanforderungen an den endgültigen Formkörper, insbesondere Verpakkungskörper, ist es wesentlich, daß die Altpapierschnitzel im Unterschied zur Papierherstellung jedoch nicht in ihre Einzelfasern zerlegt werden, sondern die Aufschließung durch den Misch- und Knetprozeß auf verhältnismäßig große Faserbündel erfolgt, da sich gezeigt hat, daß hierdurch die Festigkeit des späteren Endproduktes (Verpackungsformkörper) erhöht werden kann.

Der Misch- und Knetprozeß, für den vorzugsweise diskontinuierliche oder kontinuierliche Kneter bzw. Mischer und Kneter verwendet werden, erfolgt in Anwesenheit von Wasser, wobei, bezogen auf die Trockenmasse des Altpapieres, Wasser im Verhältnis von bis zu 8 : 1, in einigen Anwendungsfällen von etwa 7 : 1 zugegeben wird (hierbei wird verstärkt des Wasseraufnahmeverhalten der Zellulosefasern berücksichtigt).

Da es andererseits vorteilhaft ist, in Abhängigkeit von den übrigen Bestandteilen der viskosen Masse und insbesondere in Abhängigkeit vom Stärkeanteil (zu dessen hinreichender Verkleisterung das freie Wasser im wesentlichen benötigt wird) den Wasseranteil möglichst gering zu halten, um den anschließenden Formgebungsvorgang (Backen) effizient durchführen zu können, hat sich gezeigt, daß für viele, bevorzugte Anwendungen (hochfeste Formkörper, dichtes Gefüge) ein Wasseranteil von 2 : 1 bis 3 : 1, bevorzugt von 2,5 : 1, bezogen auf die Trockenmasse des Altpapieres, vorteilhaft ist. Zugleich wird in die Masse native Stärke, z.B. nativer Getreide-, Kartoffel-, Mais- oder Reisstärke gegeben. Der Misch- und Knetprozeß zur Egalisierung dieser viskosen Masse wird ebenfalls zur Faserschonung und damit zur Verminderung der Wasseraufnahme durch die Zellulosefasern praktisch vollständig unter Scherung, d.h. unter Verwendung der Scherkräfte zwischen den Masseteilchen bzw. zwischen den Masseteilchen und einem Knet- oder Mischorgan und damit durch innere Reibung bewirkt, so daß eine schonende Aufschließung der Altpapierschnitzel auf ihre Faserstruktur erfolgt.

Der Begriff "Faserstruktur" umfaßt im Rahmen dieser Anmeldung sowohl die Aufschließung bis auf Einzelfasern als auch das Aufschließen bis auf lediglich verhältnismäßig große, vorzugsweise aufgelockerte Faserbündel des Ausgangsmateriales.

Es wird in vielen Fällen bevorzugt, das Aufschließen lediglich bis auf die Faserbündel vorzunehmen, da es in Verbindung mit der Verkleisterung der Stärke hierdurch zu einer fester vernetzten Struktur und der Ausbildung eines Faserbündel-Stärke-Verbundes kommt.

Obgleich das Verhältnis von Stärke zu Fasermaterial in der viskosen Masse in weitem Rahmen variieren kann und insbesondere vom Anwendungsgebiet und den Qualitätsanforderungen an den fertigen Formkörper abhängt, wird bevorzugt, daß, bezogen auf das Trockengewicht des eingesetzten Altpapieres, die viskose Masse 30 Gew.% bis 50 Gew.% Stärke enthält.

Für besonders glatte Oberflächen bei hoher Elastizität und, bedingt durch den Einsatz gelockerter Faserbündel, die in erhöhtem Maße zur strukturellen Festigkeit beitragen, kann der Stärkeanteil aber auch wesentlich erhöht werden.

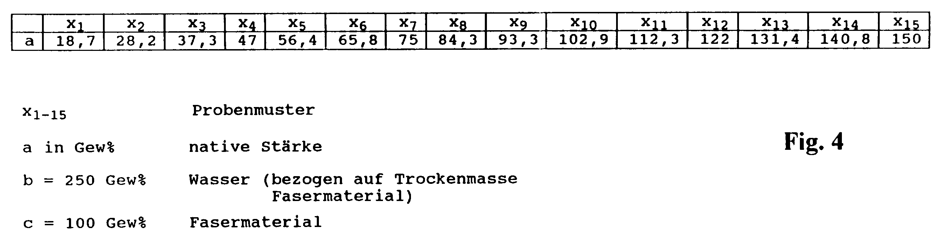

Die Stärke wird vorzugsweise als native Stärke zugemischt. Mischungsverhältnisse zwischen nativer Stärke und Fasermaterial (Altpapier), bezogen auf die Trockenmasse des Altpapieres und unter Einhaltung eines 2,5-fachen Wasserüberschusses, bezogen auf diese Trockenmasse des Altpapieres, sind in Fig. 4 dargestellt.

Innerhalb des in Fig. 1 als zweiten Verfahrensschritt (Knet- und Mischprozeß) zur Aufschließung der Altpapierschnitzel auf ihre Faserstruktur (bevorzugt Faserbündel) kann dieser Verfahrensschritt in eine Vorbehandlung der Altpapierschnitzel zur Aufweichung derselben unter Wasserzugabe und weiterer Auflockerung unterteilt werden, wobei auch in diesem Verfahrensstadium Flußmittel, insbesondere Zusätze mit alkalischer Wirkung, zur Verbesserung der Fließeigenschaften der viskosen Masse bei einem anschließenden Backprozeß sowie Füllstoffe oder Farbstoffe wahlweise beigegeben werden können.

Es ist darüber hinaus auch möglich, Füllstoffe mit der nativen Stärke oder Teilen derselben vorzumischen und teilweise bereits während des vorgeschalteten Verfahrensschrittes der Trockenzerkleinerung bei zugeben oder auch insgesamt der Mischung während der unter Anwesenheit von Wasser erfolgenden Ausbildung der viskosen Masse unter Durchführung des Misch- und Knetprozesses zum Zerlegen des Altpapieres in seine Faserstruktur beizugeben.

Wie nachstehend noch genauer erläutert wird, ist es in einer besonders vorteilhaften Verfahrensführung auch möglich, zusätzlich zu der nativen Stärke modifizierte oder vorverkleisterte Stärke zu verwenden, um einerseits während eines anschließenden Backprozesses noch eine durch den Vorverkleisterungszustand definierte Wassermenge bereitzustellen bzw. auch bei sehr kurzen Verweilzeiten der Masse im anschließenden Backprozeß eine vollständige Verkleisterung der Stärke zur Bildung eines stabilen Faser-Stärke-Verbundes zu erreichen. Bei Zugabe in Fig. 1 fakultativ zusätzlich eingesetzten vorverkleisterten Stärkeanteiles kann die freie Wasserzugabe eingeschränkt werden.

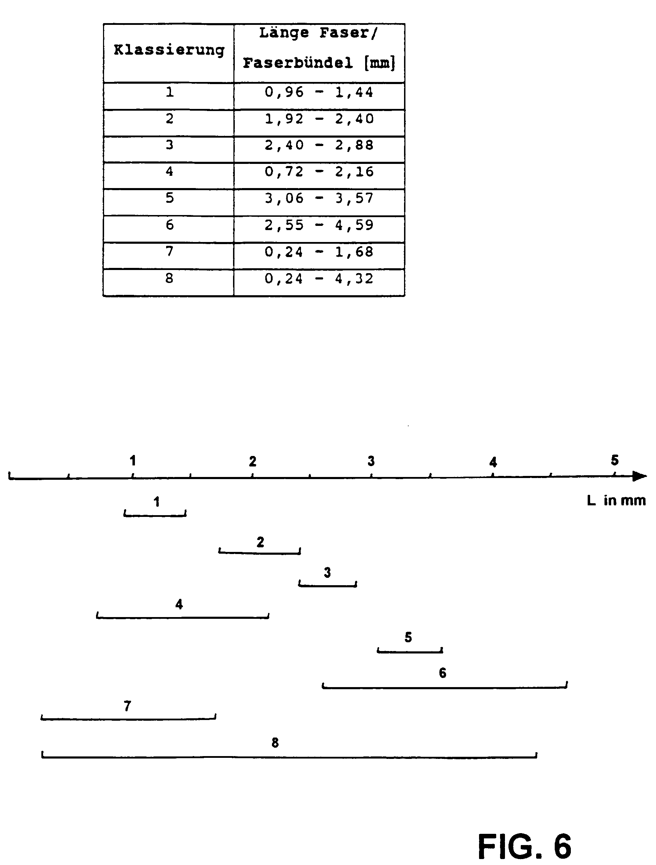

Besonders gute Ergebnisse hinsichtlich Oberflächenqualität, Elastizität, Gefügeaufbau, Struktur und Festigkeit wurden bei den hergestellten Formkörpern dann erreicht, wenn neben einer Mischung aus nativer und vorverkleisterter Stärke zugleich eine Mischung aus Fasermaterial unterschiedlicher Faserlänge, insbesondere unter Verwendung von Faserbündeln unterschiedlicher Länge oder von Faserbündeln in Verbindung mit Einzelfasern (bei Verwendung von faserhaltigem Rohmaterial wie z.B. Altpapier unterschiedlichen Zerkleinerungsgrades) verwendet wurden. Nähere Einzelheiten hierzu werden nachstehend noch mit Bezug auf andere Ausführungsbeispiele erläutert (s. Fig. 6-10).

Als Füllstoffe kommen insbesondere Kreide, Kaolin, Talkum, Gips, Tonerde, Titandioxid oder Aluminiumoxid in Betracht. Als Flußmittel werden alkalische Zusätze wie Magnesiumkarbonat, Magnesiumhydroxidkarbonat, Natronlauge oder Ammoniumhydroxid verwendet. Das Wasser, vorzugsweise in einem Anteil des 2,5-fachen der Trockenmasse des Altpapiermateriales, wird in einer Menge zugeführt, die zum einen für das Erzielen einer viskosen, fließend-breiigen bis hochviskosen, plastischen Konsistenz der Masse notwendig ist und zum anderen zur Verkleisterung der Stärke in einem anschließenden Backprozeß benötigt wird.

Es kann jedoch auch mit einem höheren Wasserüberschuß, von z.B. dem 7-fachen, bezogen auf die Trockenmasse des Altpapieres oder der 8-fachen Wassermenge gearbeitet werden, insbesondere dann, wenn zusätzlich zur nativen Stärke keine vorverkleisterte Stärke eingesetzt wird. Beim Durchmischen und Kneten der viskosen Masse wird einerseits das Altpapier auf seine Faserstruktur, hier vorzugsweise auf verhältnismäßig große Faserbündel, zerlegt und werden andererseits diese Faserbündel (oder auch Einzelfasern) innig und egalisierend mit der Stärke vermischt und eine innige Verbindung zwischen der aufgeweichten Papierfaserstruktur und der Stärke herbeigeführt.

Anschließend wird nach Egalisierung der viskosen Masse diese bezüglich der nachfolgenden Einführung in zumindest eine Backform dosiert und in die Backform eingegeben. Die Backform wird dabei durch zumindest zwei Backplatten, d.h. eine obere und eine untere Backplatte (aufgenommen in einer Backzange) gebildet, wobei die Innenoberflächen der Backplatten in einem geschlossenen, verriegelten Zustand der Backform unter Bildung eines Formhohlraumes beabstandet gehalten werden und der Formhohlraum durch die viskose Masse ausgefüllt wird. Selbstverständlich können zur gleichzeitigen Herstellung einer Mehrzahl von Formkörpern auch eine Mehrzahl von Backzangen verwendet werden.

Wie bereits dargelegt, kann die Viskosität der Masse bis hin zu einem plastischen Zustand variieren. Im letzteren, bevorzugten Fall einer beschriebenen, wasserarmen Masse, kann die Masse z.B. durch Auswalzen auf die etwa zu erwartende Wandstärke des endgültigen Formkörpers und anschließendem Ausstanzen eines Rohteiles unter Berücksichtigung der Formgeometrie erfolgen. Anschließend können diese vorgeformten Rohteile abfolgend in die Backform eingelegt werden.

In einer weiteren Ausführungsform des Verfahrens ist es auch möglich, eine dosierte Menge der viskosen Masse in die Backform zwischen die Backplatten einzubringen und durch Absenken der oberen Backzange der Backform selbst oder durch einen separaten Stempel eine Vorformung zu erreichen.

Bei niedriger viskosen Massen, die in einem fließfähigen Zustand in die Backform eingegeben werden, wird die Backform zwischen der oberen und unteren Backplatte gut ausgefüllt. Durch den verhältnismäßig hohen Wasseranteil verlängert sich jedoch teilweise nachteilig die Dauer des Backprozesses oder es wird ein unerwünscht lockerer Formkörper, bedingt durch den hohen Wasserdampfdruck in der Backform während des Backvorganges, erzeugt.

Diesen Schwierigkeiten kann begegnet werden, indem das freie Wasser der viskosen Masse (soweit es nicht für die Verkleisterung der nativen Stärke während des Backprozesses benötigt wird) vor dem Einbringen der Masse in die Backform reduziert wird. Dabei kann die viskose Masse in eine der Kontur der Backform, genauer des Formhohlraumes zwischen oberer und unterer Backzange, zumindest näherungsweise entsprechenden Siebform gegeben und durch adäquates Gegenstück belastet werden. Dieser Prozeß kann noch forciert werden, indem dieses "Abpressen" unter Vakuum erfolgt.

In diesem Fall kann das vorgeformte Masse-Rohteil dann der Siebform entnommen und in den Formhohlraum der Backform eingelegt werden.

Gegebenenfalls kann sich hieran noch ein Abdampfvorgang anschließen, ehe der Backvorgang beginnt. Ein solcher Abdampfvorgang kann dadurch ausgeführt werden, daß bei Beginn des Backprozesses die Backform nicht sofort verschlossen und unter Belassung eines konstanten, die Wandstärke des fertigen Formkörpers bestimmenden Abstandes der Innenoberflächen von oberer und unterer Backplatte verriegelt wird, sondern die obere Backplatte für eine kurze Zeitdauer nur lose aufgelegt wird, so daß infolge der Temperatur der vorgeheizten Backform, insbesondere der oberen Backplatte, der Wassergehalt (Überschußwasser) des in der Backform befindlichen Rohteiles bzw. der viskosen Masse reduziert werden kann, bevor der eigentliche Backprozeß beginnt, so daß auch eine Verkürzung der Backzeit auf diese Weise herbeigeführt werden kann und die Produkteigenschaften verbessert werden.

In Fig. 4 ist für 15 Probenmuster die Einsatzmenge von nativer Stärke bei konstant gehaltener Wassermenge (das 2,5-fache), bezogen jeweils auf die Trockenmasse des Altpapier-Fasermateriales (Faserbündel) dargestellt.

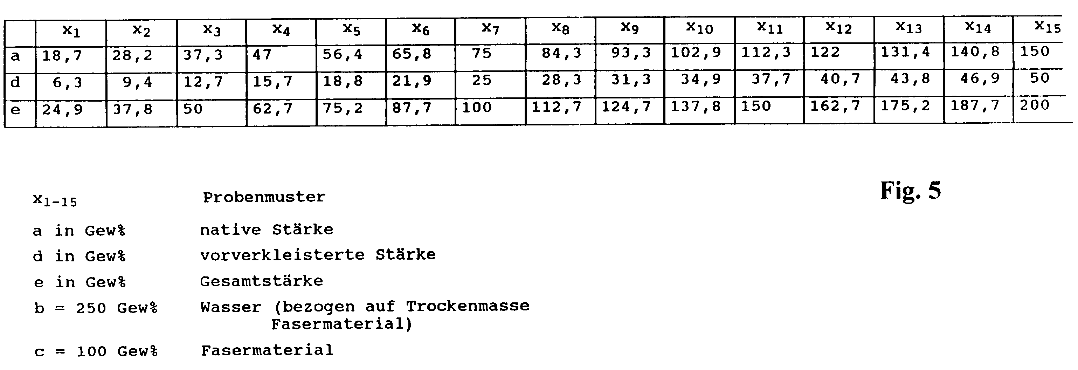

Hinsichtlich der bevorzugten Verwendung einer Mischung aus nativer und vorverkleisterter Stärke gibt die Tabelle gemäß Fig. 5 bevorzugte Verhältnisse des Einsatzes von nativer und vorverkleisterter Stärke wieder. Als vorteilhaft hat sich herausgestellt, wenn das Verhältnis zwischen nativer und vorverkleisterter Stärke ca. 3 : 1 beträgt.

Überdies wurden vorteilhafte Eigenschaften bei den erfindungsgemäß hergestellten Formkörpern dann beobachtet, wenn der Anteil von Stärke zu Wasser in der viskosen Masse 1 : 10 bis 1 : 1, vorzugsweise 1 : 3 bis 1 : 2, betrug.

Der Backprozeß, der in seiner Technologie auf Grundelemente der Waffelbacktechnologie zurückgreift, beginnt mit dem Schließen und Verriegeln der Backform unter Belassung des massegefüllten Formhohlraumes zwischen oberer Backplatte und unterer Backplatte. Dieser Abstand, der durch Verriegelung der oberen und unteren Backplatte während des Backvorganges konstant gehalten wird, bestimmt die Wandstärke des fertigen Formkörpers.

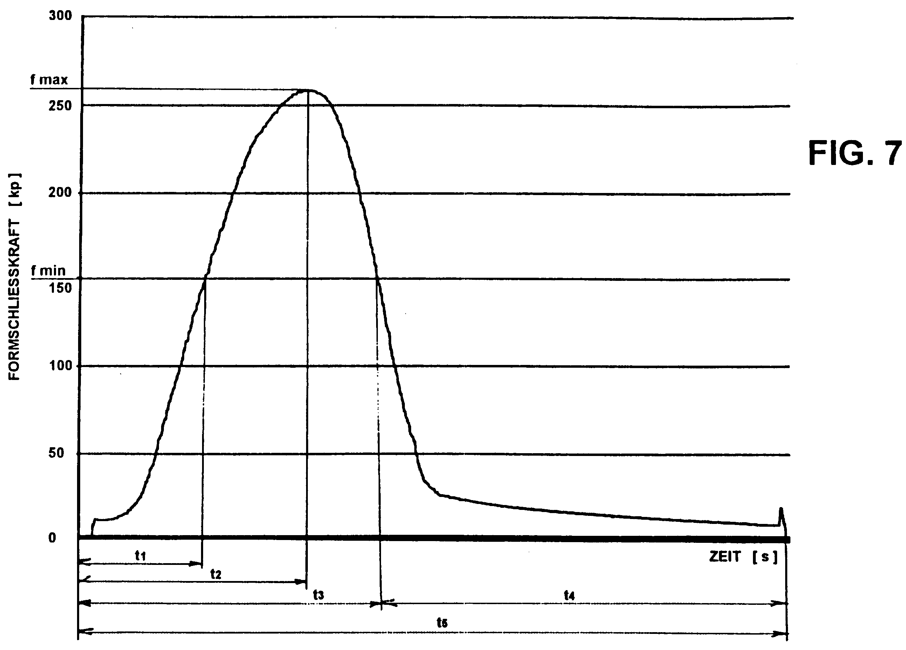

Der Backprozeß, dessen zeitlicher Ablauf in einem Druck-Zeit-Diagramm nach Fig. 7 dargestellt ist, erfolgt bei einer Temperatur zwischen 105°C und 300°C, vorzugsweise bei 150°C bis 200°C, wobei vielfach mit einer Backtemperatur von ca. 180°C besonders günstige Ergebnisse hinsichtlich des Ausbackens des Formkörpers und der Formkörpergeometrie erreicht wurden. Die Backdauer ist abhängig von verschiedenen Parametern, insbesondere von der Viskosität der Masse (Wassergehalt), dem Stärkeanteil (die Zeitdauer muß die vollständige und durchgehende Verkleisterung der nativen Stärke, auch im Zusammenwirken mit der gegebenenfalls eingesetzten modifizierten oder vorverkleisterten Stärke ermöglichen), der Geometrie des Formkörpers und den konkreten Massebestandteilen. Im allgemeinen kann zwischen einer Backdauer von 0,5 bis 15 Minuten variiert werden, wobei kürzere Zykluszeiten im Bereich von 1 bis 3 Minuten im allgemeinen ausreichend sind und zu maßhaltigen Formkörpern mit hoher, glatter Oberflächenqualität, großer Elastizität und struktureller Festigkeit aufgrund des sich ausbildenden Faser- bzw. Faserbündel-Stärke-Verbundes, einer faserverstärkten Stärkematrix, führen.

In anderen Fällen, insbesondere bei höherem Wasseranteil, hat auch eine Backdauer zwischen 4 und 12 Minuten zu guten Ergebnissen geführt, wobei zur Erhöhung der Effizienz der Verfahrensführung eine möglichst kurze Backdauer vorteilhaft ist, ohne daß die gleichmäßige innere Gefügeausbildung der Faserbündel-Stärke-Matrix beeinträchtigt wird.

In Fig. 7 ist die Formschließkraft der Backform über der Zeit aufgetragen, wobei der Druckanstieg während des dargestellten Backvorganges auf die Druckerhöhung infolge des Ausdampfens und des Verdampfungsprozesses des Wassers in der Masse zu beobachten ist. Für die vollständige Formkörperausbildung ist wesentlich, daß eine minimale, am Schließbolzen der Backform erfaßte, den Innendruck der Form aus der Wasserverdampfung repräsentierende Kraft von ca. 150 kp überschritten und andererseits der maximale Innendruck, der durch die maximal am Schließbolzen auftretende Kraft, hier von ca. 256 kp repräsentiert wird, nicht wesentlich überschritten wird oder übermäßig ansteigt.

In Fig. 7 bezeichnet t₁ die Zeit vom Verschließen der Backform bis zum Erreichen der einem minimalen Verdampfungsdruck in der Backform repräsentierenden Wert der Formschließkraft fₘᵢₙ, t₂ die Zeit vom Verschließen der Backform bis zum Erreichen eines einen maximalen Verdampfungsdruck innerhalb der Backform repräsentierenden Wert der Formschließkraft fₘₐₓ, t₃ die Zeit vom Verschließen der Backform bis zur Beendigung der Wasserdampfabgabe, t₄ die Ausbackzeit bzw. Trocknung des gebackenen Formkörpers und t₅ die gesamte Backdauer vom Schließen der Backform bis zum Öffnen der Backform repräsentieren. Im vorliegenden Fall wurde mit einer Schließkraftdifferenz fₘₐₓ-fₘᵢₙ von ca. 100 kp eine gute Qualität und Ausformbarkeit des Formkörpers erreicht, wobei t₅ die bevorzugte Backdauer im Bereich von 1 bis 3 Minuten repräsentiert.

Die Differenz t₃-t₁ betrifft somit den Backvorgang und die Formgebung unter Dampf abgabe.

Bei dem Backvorgang verkleistert die native Stärke (gegebenenfalls auch unter Wasseraufnahme von einem vorverkleisterten Stärkeanteil) und erstarrt. In die gelockerten Faserbündelstrukturen des Altpapieres wird die Stärke eingelagert und erzeugt eine stabile Bindung der gelockerten Faserstruktur mit der sich durch Verkleisterung ausbildenden Stärke-Matrix.

Wird lediglich native Stärke verwendet, genügen derartige Formkörper bereits einer Vielzahl von Anwendungsfällen hinsichtlich Elastizität und Oberflächengüte. Während ein hoher Stärkeanteil zu einer besseren Oberfläche bei allerdings verringerter Elastizität führt, kann die Elastizität des Formkörpers durch eine Verringerung des Stärkeanteiles üblicherweise nur zu Lasten einer glatten Oberfläche verringert werden. Durch das erfindungsgemäße Verfahren ist es jedoch möglich, eine wesentliche Verbesserung der Elastizität bei gleichzeitiger Gewährleistung einer hohen Oberflächengüte dadurch zu erreichen, daß neben nativer Stärke modifizierte oder vorverkleisterte Stärke verwendet wird. Die besondere Wirksamkeit der Verwendung einer Mischung aus vorverkleisterter und nativer Stärke wird darauf zurückgeführt, daß, bedingt durch die hohe Saugfähigkeit des Altpapieres, im Backprozeß für die Verkleisterung der nativen Stärke nicht genügend freies Wasser bzw. Backdauer zur Verfügung steht. Die eingebrachte, native Stärke verkleistert daher bei herkömmlichen Produkten vielfach nicht vollständig und bewirkt eine breite Streuung hinsichtlich der Elastizität der so erhaltenen Formkörper.

Erfindungsgemäß können in ihren Eigenschaften wesentlich über herkömmliche Formkörper auf Stärkebasis hinausgehende Eigenschaften dadurch erreicht werden, daß ein Teil der Stärke mit Wasser vorverkleistert wird und der viskosen Masse die vorverkleisterte Stärke beigegeben wird, wobei die Anteile sich, wie bereits oben erläutert, in einer Versuchsreihe aus den Fig. 4 und 5 (Anteil Gesamtstärke) ergeben. Die Anteile von nativer Stärke, vorverkleisterter Stärke und Wasser beziehen sich jeweils auf die Trockenmasse des Altpapieres.

Im Rahmen des erfindungsgemäßen Verfahrens hat es sich neben der Verwendung von nativer und modifizierter bzw. vorverkleisterter Stärke hinsichtlich Oberflächengüte, Elastizität, Gefügestruktur und Festigkeit der fertigen Formkörper als besonders vorteilhaft herausgestellt, wenn Fasermaterial unterschiedlicher Länge, insbesondere Faserbündel unterschiedlicher Länge oder auch Mischungen längerer Faserbündel mit kürzeren Einzelfasern, verwendet werden. Die Faserlänge wird für dünnwandige Formkörper vorzugsweise im Bereich zwischen 0,5 und 5 mm gewählt, wobei ein Überblick über die Faserfraktionen (Klassierung) in Fig. 6 gegeben ist.

In einer Modifikation des Verfahrens nach Fig. 1 ist es auch möglich, die Zerkleinerung des Altpapieres, gegebenenfalls unter Zugabe von nativer Stärke sowie Füllstoffen, nicht in trokkenem Zustand vorzunehmen, sondern bereits die mechanische Zerkleinerung in Anwesenheit von Wasser in einem entsprechenden Zerkleinerungsmischer vorzunehmen.

Hinsichtlich des Einsatzes eines Anteiles vorverkleisterter Stärke kann auch eine auf die Backtechnologie abgestimmte, modifizierte Stärke eingesetzt werden.

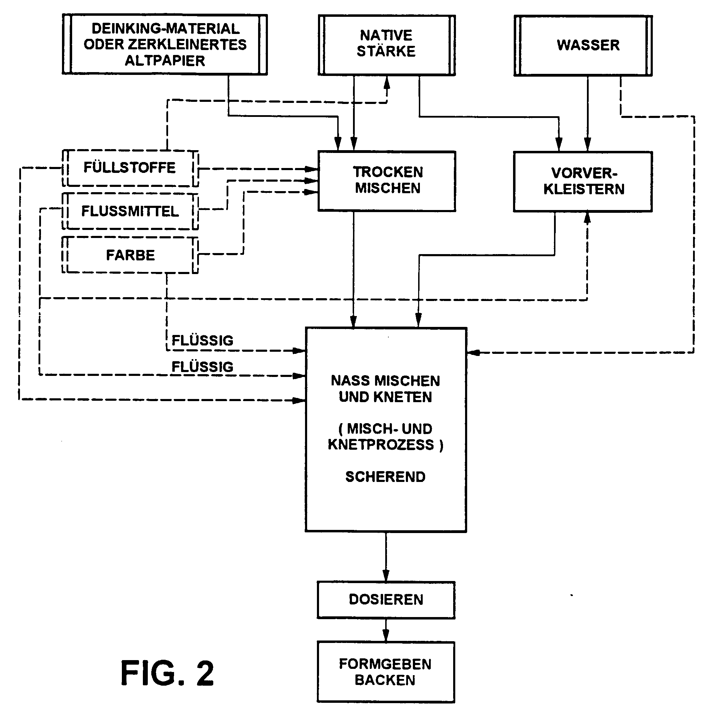

Ein weiteres Ausführungsbeispiel des erfindungsgemäßen Verfahrens wird nachstehend anhand von Fig. 2 erläutert.

Als Ausgangsmaterial (biologisch abbaubare Fasern enthaltendes, faserhaltiges Rohmaterial, insbesondere Zellulosefasern enthaltendes Material pflanzlichen Ursprungs) wird hier Deinking-Material, d.h. entfärbtes Altpapier, das sich bereits in einem pulver- bis kleinschnitzelförmigen Zustand befindet, verwendet, obwohl auch dieses Verfahren (unter Einschaltung eines Zerkleinerungsschrittes) mit Altpapier als Rohmaterial, wie im Verfahren nach Fig. 1, oder mit anderem biologisch abbaubare Fasern enthaltenen Fasermaterial durchgeführt werden kann.

Bei diesem Verfahren wird der bereits hinreichend zerkleinerte Deinking-Stoff trocken oder feucht mit einem Teil nativer Stärke, gegebenenfalls wie in dem Verfahren nach Fig. 1 unter Zugabe von Füllstoffen (die auch als Premix mit der nativen Stärke zugegeben werden können), sowie gegebenenfalls unter Zugabe von Flußmittel der vorerwähnten Art und/oder Farbstoffen vorgemischt, während ein anderer Anteil nativer Stärke mit Wasser vorverkleistert wird. Die trockene Vormischung erlaubt eine hohe Egalisierung und Homogenisierung der Masse und wird gefolgt von dem weiteren Verfahrensschritt des Misch- und Knetprozesses unter Anwesenheit von Wasser zur Aufschließung des Deinking-Materiales auf seine Faserstruktur, d.h. vorzugsweise auf aufgelockerte Faserbündel zur Ausbildung einer egalisierten viskosen Masse, der zusätzlich der Anteil vorverkleisterter Stärke unter Berücksichtigung der in Verbindung mit dem Verfahren nach Fig. 1 und den Fig. 4 und 5 angegebenen Mischungsverhältnisse von Wasser, Fasermaterial, nativer und vorverkleisterter Stärke.

Gegebenenfalls können Flußmittel auch dem in Anwesenheit von Wasser ablaufenden Misch- und Knetprozeß beigegeben werden, wie dies auch für die Füllstoffzugabe oder die Zugabe von Farbstoffsuspensionen gilt. Auch in diesem Fall wird eine möglichst schonende und nicht-schneidende Zerlegung des Deinking-Materiales auf seine Faserstruktur, insbesondere unter Bildung verhältnismäßig großer, aufgelockerter Faserbündel bewirkt, wobei noch verbesserte Formkörpereigenschaften durch die gezielte Verwendung klassierten Materiales, d.h. von Faserbündelgemischen unterschiedlicher Faserlänge erreicht werden kann.

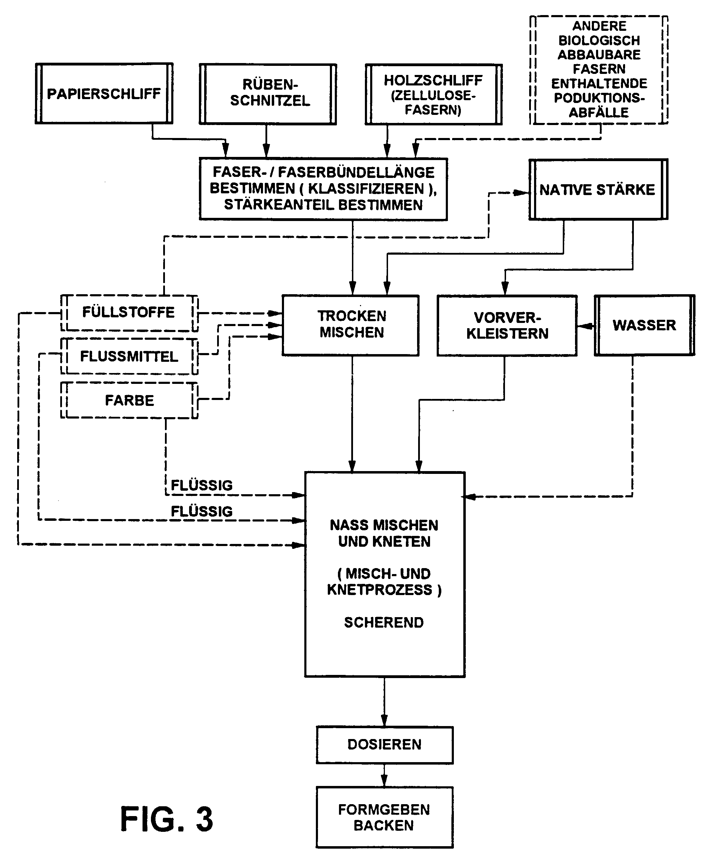

Die Trockenmischung der Bestandteile Altpapier und/oder Deinking-Material (oder auch andere zellulose- und stärkehaltige Produktionsrückstände als faserhaltiges Rohmaterial, siehe Verfahren nach Fig. 3) mit Stärke führt zu einer Verbesserung der Oberflächenqualität des Formkörpers.

Die übrigen Verfahrensschritte Dosieren sowie Backprozeß (gegebenenfalls unter vorheriger Formgebung) entsprechen den bereits anhand von Fig. 1 erläuterten, abschließenden Verfahrensschritten zur backtechnischen Herstellung der Formkörper, insbesondere für Verpackungszwecke.

Wie bereits in Verbindung mit dem Verfahren nach Fig. 1 erläutert, wird durch die Verwendung eines Gemisches aus vorverkleisterter Stärke und nativer Stärke, insbesondere durch den vorverkleisterten Anteil, die Elastizität des ausgebackenen Formkörpers maßgeblich bestimmt. Hinsichtlich der Mengenverhältnisse, die sich als vorteilhaft gezeigt haben, wird auf die Fig. 4 und 5 verwiesen.

Durch den anhand von Fig. 7 erläuterten Dampfdruck, der während des Backprozesses in der Backform herrscht (repräsentiert durch die Formschließkraft der Backform), wird die Oberfläche des Formkörpers ebenfalls mitbestimmt. Dieser Dampfdruck ist abhängig von dem Anteil nativer Stärke und der Feuchte der viskosen Masse.

Der Dampfdruck in der Backform kann durch Steuerung der Dampfabfuhrkanäle in der Backform hinsichtlich Querschnitt und Lage bis hin zur Verwendung von Steuerventilen in der gewünschten Weise gesteuert werden.

Gegebenenfalls kann auf zusätzliche Wasserzugabe in den Misch- und Knetprozeß zur Herstellung der viskosen Masse (in Fig. 2 gestrichelt dargestellt) vollständig verzichtet werden, so daß die Feuchte der Masse und damit auch der Wasseranteil zur Verkleisterung der nativen Stärke durch den Wasseranteil der eingesetzten vorverkleisterten Stärke bestimmt wird. Auf diese Weise können auch die Dampfdruckverhältnisse während des Backprozesses und damit die Oberflächenqualität der Formkörper kontrolliert werden. Die native Stärke wird vorzugsweise im Mischprozeß mit den weiteren Bestandteilen der Trockenmasse zugegeben, kann aber auch zumindest teilweise direkt in den die Faserbündelzerlegung bewirkenden und die viskose Masse egalisierenden Misch- und Knetprozeß eingeführt werden (in Fig. 2 ebenfalls gestrichelt dargestellt). Diese weiteren Bestandteile sind im vorliegenden Fall trocken zerkleinertes Altpapier und/oder Deinking-Material, alternativ zusätzlich Flußmittel und/oder Füllstoffe.

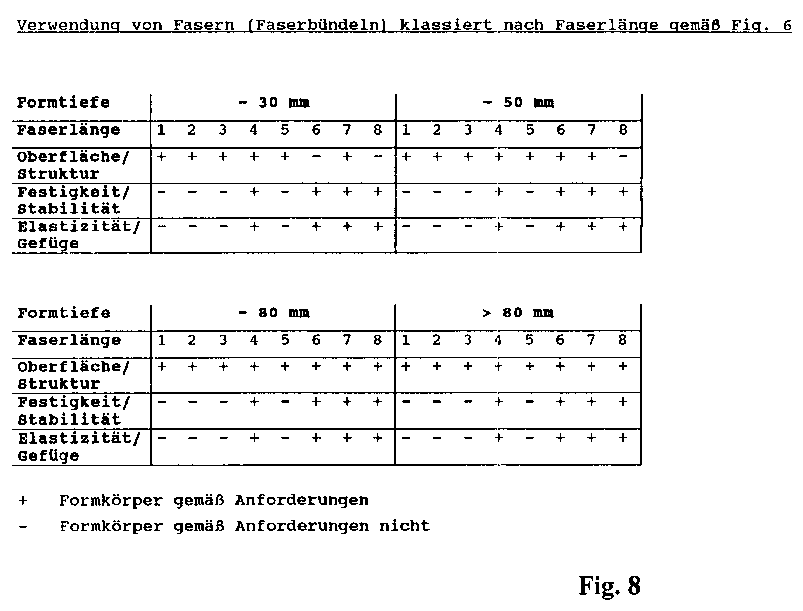

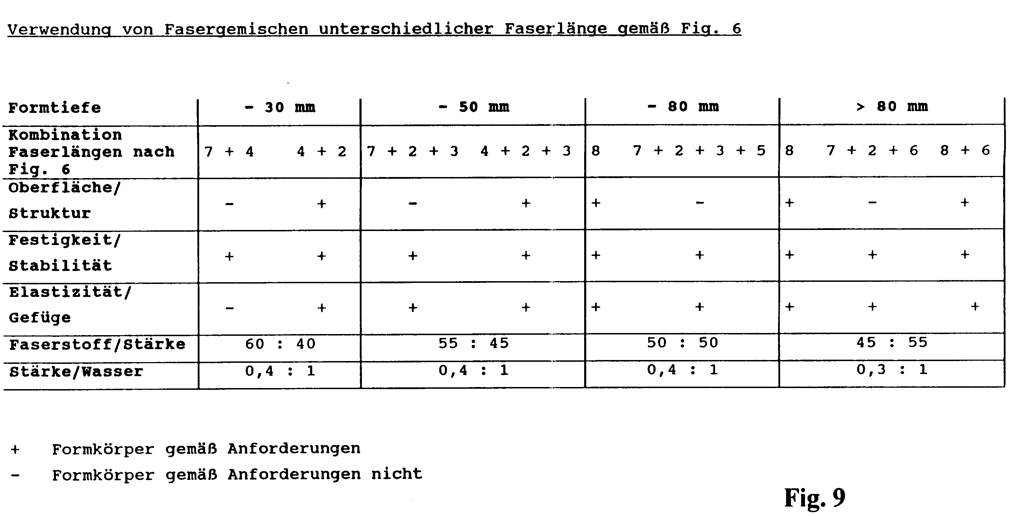

Die Struktur und damit auch die Festigkeit der Formkörper wird durch das Verhältnis von Stärke zu Altpapier bzw. Deinking-Material wesentlichen bestimmt, ebenso wie durch die Länge der verwendeten Faserbündel bzw. Fasern, die sich wesentlich auf unterschiedliche Festigkeiten auswirkt, wie Untersuchungen von Vergleichsmustern zeigen, die in Fig. 8 und 9 dargestellt sind.

Insbesondere hat sich gezeigt, daß die Verwendung von faserhaltigem Material mit biologisch abbaubaren Fasern unterschiedlicher Faserlänge, d.h. Faserbündel bzw. Fasergemische mit unterschiedlichen Faserlängen im Bereich von 0,5 mm bis ca. 10 mm, insbesondere für dünnwandige Formkörper, vorzugsweise im Bereich von 1 mm bis 5 mm, sehr vorteilhafte Ergebnisse hinsichtlich der Festigkeit unter Berücksichtigung unterschiedlicher Formkörpergeometrien und Formtiefen der Backform ergeben.

Es hat sich gezeigt, daß durch ein Gemisch von kurzen und langen Fasern bzw. kurzen und langen Faserbündeln oder auch durch ein Gemisch langer Faserbündeln und kurzer Fasern in Verbindung mit dem Einsatz hinsichtlich des Backprozesses modifizierter oder vorverkleisterter Stärke und nativer Stärke die Festigkeit der Formkörper überraschend stark erhöht werden kann (s. Fig. 9).

Generell wurde ermittelt, daß bei einem hohen Anteil nativer Stärke im Verhältnis zu vorverkleisterter oder modifizierter Stärke eine gute Oberfläche, aber nur eine verhältnismäßig geringe Elastizität der Formkörper erreicht werden kann, während ein sehr hoher Anteil von vorverkleisterter oder modifizierter Stärke im Verhältnis zu nativer Stärke zu einer guten Elastizität, aber schlechterer Oberfläche des Formkörpers führt.

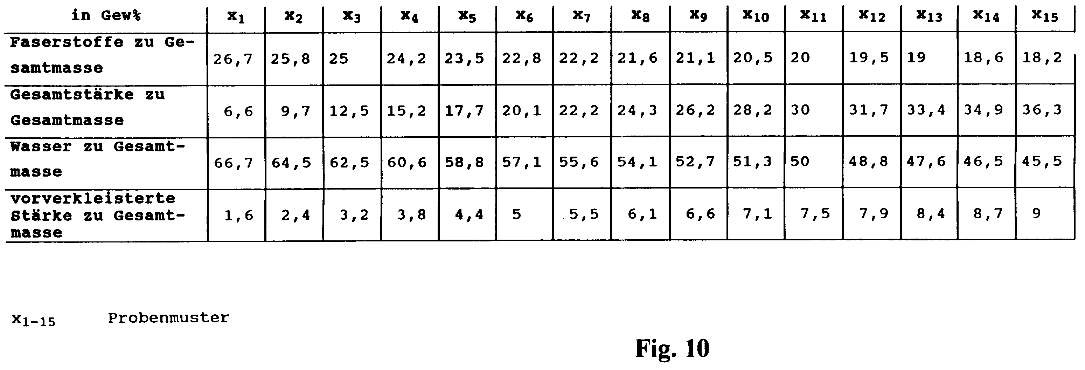

Hinsichtlich der jeweiligen Anwendung und Formkörpergeometrie ist daher das Verhältnis von nativer zu vorverkleisterter Stärke (vorzugsweise 3 : 1) unter Berücksichtigung der Faserlängen des faserhaltigen Materiales bzw. des Gemisches unterschiedlich langer Fasern oder Faserbündel anzupassen, wobei sich besonders vorteilhafte Verhältnisse auch im Hinblick auf einen verhältnismäßig kurzen Backprozeß von zwischen 0,5 und 3 Minuten bei ca. 150°C bis 200°C in Formkörpern gezeigt haben, deren Komposition in Fig. 10 dargestellt ist.

Ein weiteres Ausführungsbeispiel des erfindungsgemäßen Verfahrens ist in Fig. 3 dargestellt, wobei hier als Ausgangsmaterial mit Zellulosefasern Papierschliff, Rübenschnitzel und Holzschliff (Zellulosefasern) als beispielshafte Vertreter von Produktionsabfällen gewählt sind, wobei hierfür auch andere biologisch abbaubare Fasern enthaltende Produktionsabfälle, insbesondere auf Zellulosebasis, verwendbar sind.

Im Rahmen des erfindungsgemäßen Verfahrens können selbstverständlich auch jeweils direkt bereits aufgeschlossene, biologisch abbaubare Faserstrukturen, insbesondere Faserbündel, in einer Länge zwischen 0,5 mm und ca. 50 mm (höhere Werte für großflächige und/oder dickwandige Verpackungsformkörper), vorzugsweise zwischen 1 mm und 5 mm (insbesondere für dünnwandige, leichte Verpackungsformkörper) verwendet werden.

Fig. 3 verdeutlicht, daß das Verfahren auch unter Verwendung von Misch-Rohstoffen aus der Papier-, Lebens- oder Futtermittelindustrie bzw. verschiedenen Recyclingstoffen aus Altpapier durchgeführt werden kann, wobei in Fig. 3 diese Materialien bereits hinreichend zerkleinert, insbesondere unter Einsatz von Shreddern, Häckslern oder Schlagmühlen wie Stiftmühlen oder Hammermühlen, d.h. möglichst unter Zerreißen und nicht-schneidendem Einsatz zur Schonung der Fasern (und zur Verminderung der Wasseraufnahme von Zellulosefasern) zerkleinert sind, wobei das zerkleinerte Rohmaterial in einem weiteren Verfahrensschritt zunächst hinsichtlich der vorliegenden Faserlänge und seines Stärkeanteiles zur Einstellung der jeweils weiteren Komponenten (Zugabe von nativer und vorverkleisterter Stärke bzw. Auswahl des Mischungverhältnisses von langen und kurzen Fasern bzw. Faserbündeln) klassiert wird.

Die übrigen Verfahrensschritte unter bevorzugter Trockenmischung von faserhaltigem Rohmaterial und nativer Stärke sowie gegegenenfalls Flußmittel und/oder Füllstoffen (soweit sie in trockenem Zustand vorliegen) entsprechen denjenigen, wie sie bereits anhand der Verfahren nach den Fig. 1 und 2 erläutert wurden. Obwohl eine Trocken-Vormischung zwischen Zerkleinerung und Plastifizierung zur viskosen Masse bevorzugt wird, kann auch unmittelbar die Vereinigung der Einsatzmaterialien zur viskosen Masse in dem Misch- und Knetprozeß, gegebenenfalls in Anwesenheit von Wasser erfolgen.

Es hat sich jedoch gezeigt, daß besonders vorteilhafte Ergebnisse dann erzielt werden, wenn der Misch- und Knetprozeß ohne Wassserzugabe lediglich unter Feuchtezugabe aufgrund der unter Wasserüberschuß vorverkleisterten Stärke durchgeführt wird, wobei dies im Ergebnis zu einer hochviskosen, teigigen Masse führt. Während des Backprozesses steht zur Verkleisterung der nativen Stärke sowohl stärkeimmanentes Fruchtwasser als auch der aus der vorverkleisterten Stärke resultierende Wasserüberschuß zur Verfügung. Formkörper besonders vorteilhafter Qualität hinsichtlich Oberfläche, Struktur, Elastizität, Gefüge, Festigkeit und Stabiliät in bezug auf die Formtiefe der Backform bzw. Formkörpertiefe ergeben sich mit den in Fig. 10 dargestellten Parametern, wobei die Elastizität und die Gefügestruktur wesentlich durch den Einsatz vorverkleisterter Stärke mitbestimmt werden. Die Oberfläche und Gefügestruktur wird ferner wesentlich durch die Abdampfbedingungen während des Backprozesses, d.h. durch den Feuchteanteil der viskosen Masse bestimmt, der möglichst niedrig sein soll, wobei es in vielen Fällen für die Massevorbereitung ausreicht, die Anfeuchtung auf die indirekte Wasserzugabe in Gestalt der Beimengung unter Wasserüberschuß vorverkleisterter Stärke zu beschränken. Diese Feuchte reicht aus, um die vollständige Verkleisterung der nativen Stärke herbeizuführen.

Von wesentlichem Einfluß ist ferner die Länge der verwendeten, aufgelockerten Faserbündel, gegebenenfalls auch in Verbindung mit Einzelfasern, wobei der Fasereinsatz auch wesentlich das Fließverhalten der Masse in der Backform bestimmt und unter Berücksichtigung der Formkörpergeometrie, insbesondere der Formkörpertiefe gewählt werden muß, wobei sich die Verwendung von kurzen und langen Fasern im Gemisch (lange und kurze Faserbündel) in vielen Fällen der Verwendung klassierter Fasern von verhältnismäßig festgelegter Länge im Bereich zwischen 0,5 mm und 5 mm als überlegen gezeigt hat, wie ein Vergleich der Fig. 8 und 9 zeigt. Es können aber auch längere Fasern/Faserbündel bis ca. 10 mm Länge in Abhängigkeit von den Anforderungen an den Formkörper verwendet werden, wobei dies auch die Anforderungen an den vorgeschalteten Zerkleinerungsprozeß, z.B. des Altpapieres, herabsetzt. Obwohl dies in dem Verfahren nach Fig. 1 und 2 nicht dargestellt ist, kann bei Verwendung von Faser/ Faserbündel-Gemischen mit unterschiedlichen Längen zur Bewertung des Ausgangsmateriales selbstverständlich auch dort ein Klassieren des Fasermateriales nach Länge der Faser/Faserbündeln bzw. hinsichtlich eines Stärkegehaltes erfolgen.

Bei Verwendung z.B. feuchten Deinking-Materiales kann die Verfahrensstufe "trocken mischen" in den Verfahren nach Fig. 2 und 3 auch im feuchten Zustand gegebenenfalls auch unter geringfügiger Wasserzugabe erfolgen.

Es kann ferner vorteilhaft sein, am Beginn des Backvorganges noch viskose Masse in die bereits geschlossene Form nachzuschieben, um auch bei teigiger Masse das Formfüllverhalten zu verbessern sowie gegebenenfalls nicht mit starr verriegelten Formhälften, sondern mit einem geringfügigen Nachdrücken der oberen Backplatte gegen die untere Backplatte während des Backprozesses zu arbeiten. Im allgemeinen hat es sich jedoch als hinreichend erwiesen, die Backtechnologie mit starr verriegelten Backplatten (konstanter Abstand = Wanddicke des Formkörpers während des Backprozesses) beizubehalten.

Erforderlichenfalls kann sich an dem Backprozeß nach den in Fig. 1 bis 3 dargestellten Verfahren ein Konditionieren der erhaltenen, aus der Backform entnommenen Formkörper anschließen.

Ein Vergleich der Fig. 8 und 9 verdeutlicht nochmals die Vorteile der Verwendung von Fasergemischen unterschiedlicher Faserlängen gegenüber der Verwendung von Zellulosefasern bzw. Faserbündeln, die lediglich eine bestimmte bzw. in einem engen Bereich liegende Faserlänge repräsentieren.

Bevorzugte Rezepturen zur Ausführung des erfindungsgemäßen Verfahrens sind in Fig. 10 dargestellt. Hieraus ergibt sich, daß auch Formkörper mit sehr großer Formtiefe mit guter Festigkeit, Elastizität, Gefüge und Oberflächenstruktur nach dem erfindungsgemäßen Verfahren hergestellt werden konnten, wenn der Einsatz an Fasermaterial, insbesondere aufgelockerter Faserbündel, zur Gesamtmasse der viskosen Masse 15 bis 30 Gew.% betrug, der Anteil Gesamtstärke (nativer plus vorverkleisterter Stärke) zur Gesamtmasse der viskosen Masse ca. 40 bis 5 Gew.% betrug, der Wasseranteil in der Gesamtmasse der viskosen Masse ca. 45 bis 70 Gew.% betrug und der Anteil vorverkleisterter Stärke an der Gesamtmasse der viskosen Masse ca. 10 bis 1% betrug.

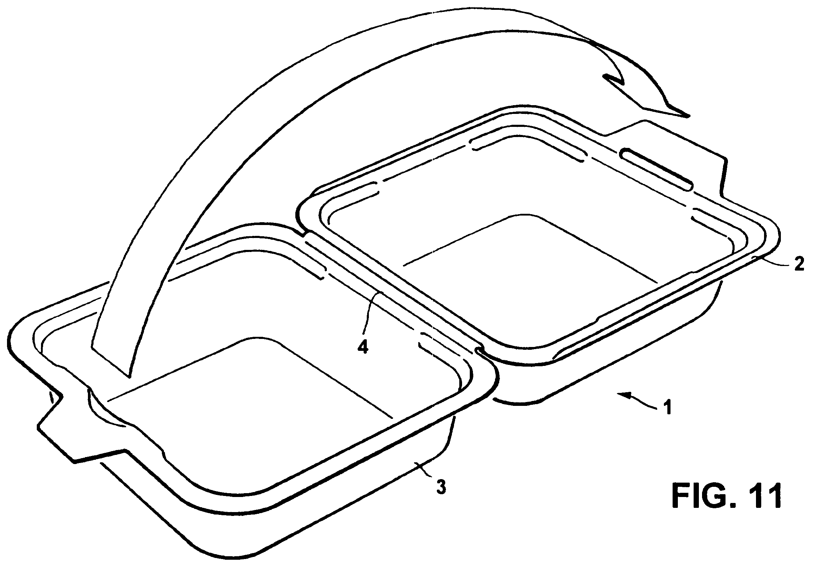

In den Fig. 11 bis 14 sind Ausführungsbeispiele von Formkörpern, die nach dem erfindungsgemäßen Verfahren hergestellt wurden, dargestellt. Fig. 11 zeigt einen Verpackungsformkörper 1 mit Boden- und Deckelteil 2, 3, die durch ein Scharnier 4 verbunden sind und z.B. zur verschließbaren Aufnahme von Lebensmitteln, auch im warmen Zustand, geeignet ist.

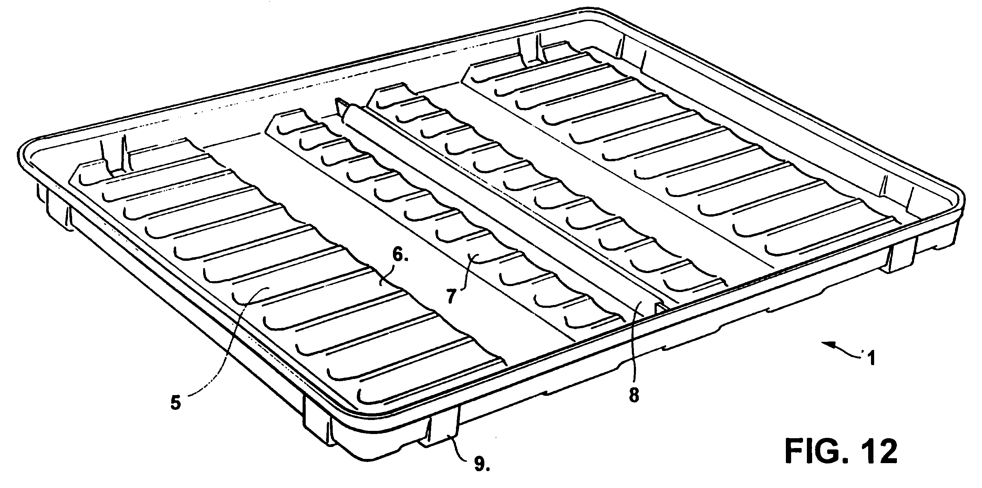

Fig. 12 zeigt einen Formkörper (Halbschale), der mit einem entsprechenden Gegenformkörper auch zu einer vollkommen geschlossenen Verpackung verbunden werden kann. Der schalenförmige Formkörper 1 weist eine Vielzahl von zylinderabschnittförmigen Vertiefungen 5 auf, wobei diese untereinander in einen längeren Abschnitt 6 und einen kürzeren Abschnitt 7 unterteilt sind und sich diese Anordnung symmetrisch, geteilt durch einen Mittelsteg 8 auf der anderen Seite des Formkörpers wiederholt. Seitliche "Füße" 9 erhöhen die Formstabilität und verbessern die Auflage und Stapelfähigkeit des Verpackungsformkörpers. Eine derartige Verpackungsschale kann z.B. zur Aufnahme von Kugelschreibern, Lippenstiften, Kosmetikartikeln, Bleistiften, Schreibgeräten, oder auch in der Pharmazie, z.B. zum Aufnehmen von Verpackungsröhrchen, verwendet werden.

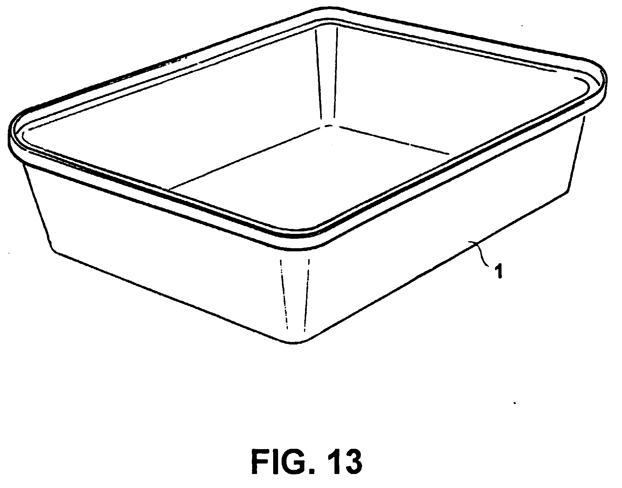

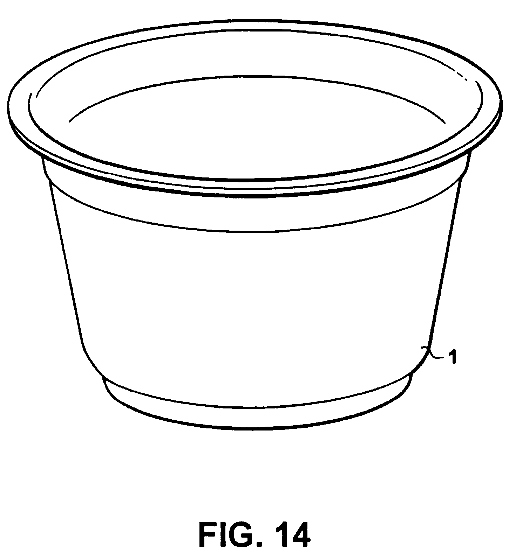

Die Fig. 13 und 14 zeigen verhältnismäßig tiefe Verpackungskörper 1, wie sie z.B. als Blumentopf, Saatgutschale oder für sonstige Verpackungs- oder Umhüllungszwecke verwendet werden können.

Alle Verpackungsformkörper 1, die nach dem vorerläuterten Verfahren hergestellt werden, könnten rasch, kostengünstig und mit hervorragenden Materialeigenschaften hinsichtlich Formstabilität, Bruchfestigkeit und Elastizität, Gefügedichte und Oberflächenbeschaffenheit hergestellt werden.

## Patentansprüche

1. Verfahren zur Herstellung von Formkörpern, insbesondere Verpackungsformkörpern, aus biologisch abbaubarem Material unter Verwendung einer viskosen Masse, die biologisch abbaubares Fasermaterial, Wasser und Stärke enthält und unter Ausbildung eines Fasermaterial-Stärke-Verbundes in einer geschlossenen Backform unter Druckerhöhung infolge des Ausdampfens von Wasser gebacken wird, wobei das Verhältnis von Stärke zu Fasermaterial in der viskosen Masse im Bereich von 15 Gew.% bis 200 Gew.% liegt und das Backen für eine Zeitdauer zwischen 0,5 und 15 Minuten bei einer Backtemperatur zwischen 105°C und 300°C erfolgt.

2. Verfahren nach Anspruch 1 dadurch gekennzeichnet, daß zur Bildung des Fasermateriales faserhaltiges Rohmaterial verwendet wird.

3. Verfahren nach Anspruch 2 dadurch gekennzeichnet, daß das faserhaltige Rohmaterial Altpapier, Recyclingmaterial, biologisch abbaubares Fasermaterial ist.

4. Verfahren nach Anspruch 1, dadurch gekennzeichnet, daß das Fasermaterial direkt aus biologisch abbaubaren Fasern oder Faserbündeln besteht.

5. Verfahren nach zumindest einem der vorhergehenden Ansprüche 1 bis 4, dadurch gekennzeichnet, daß als Fasermaterial eine Mischung aus lang- und kurzfasrigen Fasern oder Faserbündeln mit einer Faser- oder Faserbündellänge in einem Bereich von 0,5 bis 50 mm verwendet wird.

6. Verfahren nach zumindest einem der vorhergehenden Ansprüche 1 bis 5, dadurch gekennzeichnet, daß als Stärke native und/oder vorverkleisterte Stärke verwendet wird.

7. Verfahren nach zumindest einem der vorhergehenden Ansprüche 2 bis 6, dadurch gekennzeichnet, daß, bezogen auf das Trockengewicht des faserhaltigen Rohmateriales die viskose Masse 30 Gew.% bis 50 Gew.% Stärke enthält.

8. Verfahren nach zumindest einem der vorhergehenden Ansprüche 1 bis 7, dadurch gekennzeichnet, daß zur Bildung der viskosen Masse Wasser im Verhältnis von bis zu ca. 8 : 1 bezogen auf die Trockenmasse des faserhaltigen Rohmateriales zugesetzt wird.

9. Verfahren nach zumindest einem der vorhergehenden Ansprüche 1 bis 8, dadurch gekennzeichnet, daß der Anteil vorverkleisterter oder modifizierter Stärke am gesamten Stärkeanteil innerhalb der viskosen Masse ca. 30 Gew.% beträgt.

10. Verfahren nach zumindest einem der vorhergehenden Ansprüche 1 bis 9, dadurch gekennzeichnet, daß der Anteil von Stärke zu Wasser in der viskosen Masse 1 : 10 bis 1 : 1 beträgt und Wasser zur Bildung der viskosen Masse anschließend in Form von modifizierter oder unter Wasserüberschuß vorverkleisterter Stärke zugegeben wird.

11. Verfahren nach zumindest einem der vorhergehenden Ansprüche 1 bis 10, dadurch gekennzeichnet, daß in der viskosen Masse der Anteil Fasermaterial 15 Gew.% bis 30 Gew.%, der Anteil Stärke 5 Gew.% bis 40 Gew.%, der Anteil Wasser 70 Gew.% bis 40 Gew.% beträgt.

12. Verfahren nach Anspruch 11 dadurch gekennzeichnet, daß in der viskosen Masse der Anteil vorverkleisterter oder modifizierter Stärke 1 Gew.% bis 10 Gew.% beträgt.

13. Verfahren nach zumindest einem der vorhergehenden Ansprüche 2 bis 12, dadurch gekennzeichnet, daß das faserhaltige Rohmaterial zerkleinert und anschließend in Anwesenheit von Wasser unter Zugabe von Stärke auf seine Faserstruktur zurückgeführt und die formbare, viskose Masse gebildet und diese anschließend gebacken wird.

14. Verfahren nach zumindest einem der vorhergehenden Ansprüche 2 bis 12, dadurch gekennzeichnet, daß das faserhaltige Rohmaterial unter Anwesenheit von Wasser zerkleinert und anschließend unter Zugabe von Stärke auf seine Faserstruktur zurückgeführt und die formbare, viskose Masse gebildet und diese anschließend gebacken wird.

15. Verfahren nach zumindest einem der vorhergehenden Ansprüche 2 bis 14, dadurch gekennzeichnet, daß die Rückführung des zerkleinerten, faserhaltigen Rohmateriales auf seine Fasern oder auf Faserbündel in einem Misch- und Knetprozeß unter Einwirkung innerer Scherkräfte erfolgt.

16. Verfahren nach zumindest einem der vorhergehenden Ansprüche 1 bis 15, dadurch gekennzeichnet, daß vor dem Backen der viskosen Masse diese dosiert wird.

17. Verfahren nach zumindest einem der vorhergehenden Ansprüche 1 bis 16, dadurch gekennzeichnet, daß das faserhaltige Rohmaterial, oder das unmittelbar verwendete Fasermaterial hinsichtlich seiner Faserlänge sowie seines Stärkeanteiles untersucht und vor oder nach dem Zerkleinerungsvorgang klassiert wird.

18. Verfahren nach zumindest einem der vorhergehenden Ansprüche 2 bis 17, dadurch gekennzeichnet, daß die native Stärke teilweise bereits während einer Zerkleinerung des faserhaltigen Rohmateriales beigegeben wird.

19. Verfahren nach zumindest einem der vorhergehenden Ansprüche 2 bis 18, dadurch gekennzeichnet, daß die Stärke dem faserhaltigen Rohmaterial, zumindest teilweise, während des Zerkleinerungsvorganges und/oder eines anschließenden Trokken- oder Naß-Mischvorganges und/oder während des anschließenden, egalisierenden Misch- und Knetvorganges als native und/oder modifizierte, zugesetzt wird.

20. Verfahren nach zumindest einem der vorhergehenden Ansprüche 2 bis 19, dadurch gekennzeichnet, daß die Stärke als vorverkleisterte Stärke und als native Stärke eingesetzt und die native Stärke vor Zugabe in den Zerkleinerungsprozeß des faserhaltigen Rohmateriales oder in den anschließenden, egalisierenden und das faserhaltige Rohmaterial auf seine Faserstruktur zurückführenden Misch- und Knetprozeß zumindest ein Füllstoffmaterial beigegeben wird.

21. Verfahren nach zumindest einem der vorhergehenden Ansprüche 1 bis 20, dadurch gekennzeichnet, daß die vorverkleisterte Stärke direkt in den Misch- und Knetprozeß zur Bildung der viskosen Masse gegeben wird.

22. Verfahren nach zumindest einem der vorhergehenden Ansprüche 1 bis 21, dadurch gekennzeichnet, daß die Bildung der viskosen Masse unter Verwendung eines Gemisches aus kurz- und langfasrigen Einzelfasern und/oder Faserbündeln erfolgt.

23. Verfahren nach zumindest einem der vorhergehenden Ansprüche 2 bis 22, dadurch gekennzeichnet, daß die Bildung der viskosen Masse unter Verwendung faserhaltigen Rohmateriales unterschiedlichen Zerkleinerungsgrades und unterschiedlicher Faserlänge erfolgt.

24. Verfahren nach zumindest einem der vorhergehenden Ansprüche 2 bis 23, dadurch gekennzeichnet, daß die Zerkleinerung und/oder Zerfaserung des faserhaltigen Rohmateriales faserschonend und ohne scharfe Schnittkanten der Zerkleinerungseinrichtung erfolgt.

25. Verfahren nach Anspruch 5 dadurch gekennzeichnet, daß die Faserbündel während des Zerfaserns des zerkleinerten faserhaltigen Rohmateriales aufgelockert werden.

26. Verfahren nach zumindest einem der vorhergehenden Ansprüche 1 bis 25, dadurch gekennzeichnet, daß der viskosen Masse alkalische Zusätze als Flußmittel zugegeben werden.

27. Verfahren nach zumindest einem der vorhergehenden Ansprüche 1 bis 26, dadurch gekennzeichnet, daß die viskose Masse in einen teigigen Zustand gebracht, auf etwa eine Wandstärke des Formkörpers ausgewalzt, Rohlinge ausgestanzt und diese Rohlinge in die Backform eingelegt werden.

28. Verfahren nach zumindest einem der vorhergehenden Ansprüche 1 bis 27, dadurch gekennzeichnet, daß eine dosierte Menge der Masse in eine aus einer zumindest eine obere und eine untere Backplatte gebildeten Backform eingefüllt und die in die Backform eingefüllte Masse durch die obere Backplatte oder einen Stempel vorgeformt wird.

29. Verfahren nach zumindest einem der vorhergehenden Ansprüche 1 bis 28, dadurch gekennzeichnet, daß vor Einfüllen der Masse in die Backform diese beheizt wird.

30. Verfahren nach zumindest einem der vorhergehenden Ansprüche 1 bis 29, dadurch gekennzeichnet, daß vor Beginn des Bakkens durch Verschließen und Verriegeln der Backplatten der Backform die obere Backplatte auf die eingefüllte Masse für eine vorgegebene Zeitspanne lose aufgelegt und ein Wassergehalt der Masse durch Verdampfen verringert wird.

31. Verfahren nach zumindest einem der vorhergehenden Ansprüche 28 bis 30, dadurch gekennzeichnet, daß die zumindest zwei Backplatten der Backform am Beginn des Backvorganges miteinander unter Gewährleistung eines konstanten Abstandes der oberen und unteren Backplatte während des Backprozesses zueinander verriegelt werden, wobei der Abstand der einander zugewandten Innenoberflächen der Backplatten, zwischen denen sich die Masse befindet, eine Wandstärke des gebackenen Formkörpers bestimmt.

32. Verfahren nach zumindest einem der vorhergehenden Ansprüche 1 bis 31, dadurch gekennzeichnet, daß während des Backvorganges eine kontrollierte Abfuhr von Wasserdampf aus der Backform erfolgt.

33. Verfahren nach Anspruch 32, dadurch gekennzeichnet, daß die Abführung von Wasserdampf aus dem Formhohlraum der Backform zeitlich und/oder örtlich gesteuert und/oder innendruckgesteuert erfolgt.

34. Verfahren nach zumindest einem der vorhergehenden Ansprüche 30 bis 33, dadurch gekennzeichnet, daß nach Schließen und Verriegeln der Backplatten der Backform am Beginn des Backvorganges ein Nachdrücken von viskoser Masse in die Backform erfolgt.

35. Verfahren nach zumindest einem der vorhergehenden Ansprüche 1 bis 34, dadurch gekennzeichnet, daß der Wasseranteil der viskosen Masse vor dem Backprozeß vermindert wird.

36. Verfahren nach Anspruch 35, dadurch gekennzeichnet, daß die Masse vor dem Einbringen in die Backform in eine der Formhohlraumgeometrie der Backform im wesentlichen entsprechende Siebform gegeben und die Masse durch einen passenden Stempel belastet wird und die vorgeformte Masse als Rohteil nach Erreichen der vorgesehenen Verringerung des Wassergehaltes aus der Siebform entnommen und die Backform eingelegt wird.

37. Verfahren nach Anspruch 36, dadurch gekennzeichnet, daß das in die Backform eingelegte, vorgeformte Rohteil vor dem Verschließen und Verriegeln der Backplatten der Backform einem Abdampfprozeß unter Auflegen der beheizten oberen Backzange auf das Rohteil unterzogen wird.

38. Verfahren nach zumindest einem der vorhergehenden Ansprüche 1 bis 37, dadurch gekennzeichnet, daß der Backprozeß unter Abstandsverringerung zwischen oberer und unterer Backplatte der Backform erfolgt.

39. Verfahren nach zumindest einem der vorhergehenden Ansprüche 1 bis 38, dadurch gekennzeichnet, daß das faserhaltige Rohmaterial zerkleinert und unter Anwesenheit von Wasser auf seine Faserstruktur zurückgeführt und eine formbare Masse gebildet wird, wobei der Masse 30 Gew.% bis 50 Gew.% Stärke, bezogen auf das Trockengewicht des faserhaltigen Rohmateriales zugesetzt wird, und das faserhaltige, zerkleinerte Rohmaterial, in einem Misch- und Knetvorgang in Faserbündel zerlegt und in einen schwerfließenden bis plastischen Zustand versetzt sowie zur Ausbildung des Formkörpers in eine durch zusammenwirkende Backplatten gebildete Backform eingebracht und bei einer Temperatur von 150°C bis 200° C unter Bildung eines stabilen Faserbündel-Stärke-Verbundes zu dem Formkörper mit glatter Oberfläche gebacken wird.

40. Verfahren nach zumindest einem der vorhergehenden Ansprüche 1 bis 39, **dadurch gekennzeichnet**, daß das faserhaltige Rohmaterial zerkleinert und unter Anwesenheit von Wasser auf seine Faserstruktur zurückgeführt und eine formbare Masse gebildet wird, wobei der Masse 15 Gew.% bis 30 Gew.% Stärke, bezogen auf das Trockengewicht des faserhaltigen Rohmateriales zugesetzt wird, und das faserhaltige, zerkleinerte Rohmaterial in einem Misch- und Knetvorgang in Faserbündel zerlegt und in einen schwerfließenden bis plastischen Zustand versetzt sowie zur Ausbildung des Formkörpers in eine durch zusammenwirkende Backplatten gebildete Backform eingebracht und bei einer Temperatur von 150°C bis 200°C unter Bildung eines stabilen Faserbündel-Stärke-Verbundes zu dem Formkörper mit glatter Oberfläche gebacken wird.

41. Verfahren nach Anspruch 39 oder 40, dadurch gekennzeichnet, daß die Zeitdauer des Backvorganges 1 bis 15 Minuten abhängig von der Zusammensetzung und dem Wassergehalt der Masse, beträgt.

42. Verfahren nach zumindest einem der vorhergehenden Ansprüche 1 bis 41, dadurch gekennzeichnet, daß für dickwandige und/oder großflächige Formkörper langfasrige Fasern oder Faserbündel bis zu 50 mm Länge verwendet werden.

43. Formkörper, insbesondere Verpackungsformkörper, aus biologisch abbaubarem Material, bestehend aus biologisch abbaubarem Fasermaterial, Stärke und einem Restanteil Wasser, hergestellt gemäß Verfahren nach zumindestens einem der vorhergehenden Ansprüche 1 bis 42, wobei das Verhältnis Fasermaterial zur Stärke 4:1 bis 1:2 beträgt.

44. Formkörper nach Anspruch 43, dadurch gekennzeichnet, daß der Formkörper ein Gemisch aus lang- und kurzfasrigen Fasern, oder aus aufgelockerten Faserbündeln zwischen 0,5 mm und 5 mm Faser- bzw. Faserbündellänge enthält.

45. Formkörper nach Anspruch 43 oder 44, dadurch gekennzeichnet, daß der Formkörper einen Anteil vorverkleisteter Stärke enthält.

46. Formkörper nach zumindest einem der vorhergehenden Ansprüche 43 bis 45, dadurch gekennzeichnet, daß der Formkörper ein Gemisch aus aufgelockerten Faserbündeln und Einzelfasern oder Faserbündeln enthält.

47. Formkörper nach zumindest einem der vorhergehenden Ansprüche 43 bis 46, dadurch gekennzeichnet, daß der Formkörper einen stabilen Faser-/Faserbündel-Stärke-Verbund aufweist.

48. Formkörper nach zumindest einem der vorhergehenden Ansprüche 43 bis 47, dadurch gekennzeichnet, daß der Formkörper ein Faser/Faserbündel-Gerüst, durchdrungen von einer Stärke-Matrix, aufweist.

## Claims

1. A process for the production of shaped bodies, particularly shaped packaging bodies, from biodegradable material using a viscous mass which contains biodegradable fiber material, water and starch and is baked in a closed baking mold under increasing pressure due to the evaporation of water with a composite of fiber material and starch being formed, the ratio of starch to fiber material in the viscous mass being in the range of from 15% by weight to 200% by weight and baking being carried out at a baking temperature between 105°C and 300°C for a period of between 0.5 and 15 minutes.

2. A process according to claim 1, characterized in that fiber-containing raw material is used for forming the fiber material.

3. A process according to claim 2, characterized in that the fiber-containing raw material is waste paper, recycling material, biodegradable fiber material.

4. A process according to claim 1, charaterized in that the fiber material consists directly of biodegradable fibers or fiber bundles.

5. A process according to at least one of the preceding claims 1 to 4, characterized in that a mixture of long-fibered and short-fibered fibers of fiber bundles having a fiber or fiber bundle length ranging from 0.5 mm to 50 mm is used as the fiber material.

6. A process according to at least one of the preceding claims 1 to 5, characterized in that native and/or pre-gelatinated starch is used as the starch.

7. A process according to at least one of the preceding claims 2 to 6, characterized in that, based on the dry weight of the fiber-containing raw material,
the viscous mass contains 30% by weight to 50% by weight of starch.

8. A process according to at least one of the preceding claims 1 to 7, characterized in that, for the formation of the viscous mass, water is added in a ratio of up to about 8 : 1, based on the dry mass of the fiber-containing raw material.

9. A process according to at least one of the preceding claims 1 to 8, characterized in that the amount of pre-gelatinated or modified starch in the total amount of starch within the viscous mass is about 30% by weight.

10. A process according to at least one of the preceding claims 1 to 9, characterized in that the ratio of starch to water in the viscous mass is 1 : 10 to 1 : 1 and water is subsequently added in the form of modified starch, or starch pre-gelatinated with excess water, to form the viscous mass.

11. A process according to at least one of the preceding claims 1 to 10, characterized in that the amount of fiber material is 15% by weight to 30% by weight, the amount of starch is 5% by weight to 40% by weight, the amount of water is 70% by weight to 40% by weight in the viscous mass.

12. A process according to claim 11, characterized in that the amount of pre-gelatinated or modified starch is 1% by weight to 10% by weight in the viscous mass.

13. A process according to at least one of the preceding claims 2 to 12, characterized in that the fiber-containing raw material is comminuted and subsequently reduced to its fiber structure in the presence of water and with addition of starch, and the shapable, viscous mass is formed and is subsequently baked.

14. A process according to at least one of the preceding claims 2 to 12, characterized in that the fiber-containing raw material is comminuted in the presence of water and subsequently reduced to its fiber structure with addition of starch,
and the shapable, viscous mass is formed and is subsequently baked.

15. A process according to at least one of the preceding claims 2 to 14, characterized in that the reduction of the comminuted, fiber-containing raw material to its fibers or to fiber bundles is carried out in a mixing and kneading process under the action of inner shearing forces.

16. A process according to at least one of the preceding claims 1 to 15, characterized in that the viscous mass is metered prior to being baked.

17. A process according to at least one of the preceding claims 1 to 16, characterized in that the fiber-containing raw material or the directly used fiber material is examined as regards its fiber length and its amount of starch, and is classified prior to or after the comminution process.

18. A process according to at least one of the preceding claims 2 to 17, characterized in that the native starch is partly added already during comminution of the fiber-containing raw material.

19. A process according to at least one of the preceding claims 2 to 18, characterized in that the starch is added to the fiber-containing raw material, at least partly, during the comminution process and/or during a subsequent dry or wet mixing process and/or during the subsequent leveling mixing and kneading process as a native and/or modified starch.

20. A process according to at least one of the preceding claims 2 to 19, characterized in that the starch is used as pre-gelatinated starch and as native starch, and at least one filler material is added to the native starch prior to addition to the comminution process of the fiber-containing raw material or to the subsequent, leveling mixing and kneading process reducing the fiber-containing raw material to its fiber structure.

21. A process according to at least one of the preceding claims 1 to 20, characterized in that the pre-gelatinated starch is directly added to the mixing and kneading process to form the viscous mass.

22. A process according to at least one of the preceding claims 1 to 21, characterized in that the formation of the viscous mass is carried out using a mixture of short-fibered and long-fibered individual fibers and/or fiber bundles.

23. A process according to at least one of the preceding claims 2 to 22, characterized in that the viscous mass is formed using fiber-containing raw material of a differing degree of comminution and differing fiber length.

24. A process according to at least one of the preceding claims 2 to 23, characterized in that the comminution and/or defibration of the fiber-containing raw material is carried out preserving the fibers and without sharp cutting edges of the comminution means

25. A process according to claim 5, characterized in that the fiber bundles are loosened during defibration of the comminuted, fiber-containing raw material.

26. A process according to at least one of the preceding claims 1 to 25, characterized in that alkaline additives are added to the viscous material as fluxing agents.

27. A process according to at least one of the preceding claims 1 to 26, characterized in that the viscous mass is converted into a doughy state, rolled to approximately a wall thickness of the shaped body, blanks are punched out and said blanks are placed into the baking mold.

28. A process according to at least one of the preceding claims 1 to 27, characterized in that a metered amount of the mass is filled into a baking mold formed by at least one upper and one lower baking plate and that the mass filled into the baking mold is preshaped by the upper baking plate or a die.

29. A process according to at least one of the preceding claims 1 to 28, characterized in that, prior to the mass being filled into the baking mold, said baking mold is heated.

30. A process according to at least one of the preceding claims 1 to 29, characterized in that, prior to the beginning of the baking process by closing and locking the baking plates of the baking mold, the upper baking plate is loosely placed onto the filled mass for a given period of time and a water content of the mass is reduced by means of evaporation.

31. A process according to at least one of the preceding claims 28 to 30, characterized in that the at least two baking plates of the baking mold are locked with one another at the beginning of the baking process ensuring a constant distance of the upper and lower baking plates to each other during the baking process, the distance of the inner surfaces of the baking plates facing each other, between which the mass is located, defining a wall thickness of the baked shaped body.

32. A process according to at least one of the preceding claims 1 to 31, characterized in that during the baking process a controlled discharge of steam from the baking mold takes place.

33. A process according to claim 32, characterized in that the discharge of steam from the mold cavity of the baking mold is carried out in a timed and/or locally controlled and/or internal-pressure controlled fashion.

34. A process according to at least one of the preceding claims 30 to 33, characterized in that, after the baking plates of the baking mold have been closed and locked, further viscous mass is squeezed into the baking mold at the beginning of the baking process.

35. A process according to at least one of the preceding claims 1 to 34, characterized in that the amount of water of the viscous mass is reduced prior to the baking process.

36. A process according to claim 35, characterized in that, prior to being introduced into the baking mold, the mass is placed into a sieve-type mold substantially corresponding to the geometry of the mold cavity of the baking mold, and the mass is loaded by a suited die,
and the preshaped mass is removed from the sieve-type mold as a blank after the intended reduction of the water content has been reached, and is placed into the baking mold.

37. A process according to claim 36, characterized in that the preshaped blank placed into the baking mold is subjected to an evaporation process by placing the heated upper baking tongs onto the blank prior to the closing and locking of the baking plates of the baking mold.

38. A process according to at least one of the preceding claims 1 to 37, characterized in that the baking process takes place with a reduction of the distance between upper and lower baking plates of the baking mold.

39. A process according to at least one of the preceding claims 1 to 38, characterized in that the fiber-containing raw material is comminuted and reduced to its fiber structure in the presence of water, and that a shapable mass is formed, 30% by weight to 50% by weight of starch, based on the dry weight of the fiber-containing raw material being added to the mass, and the fiber-containing, comminuted raw material is disintegrated into fiber bundles in a mixing and kneading process and converted to a poor-flowing to plastic state and introduced into a baking mold formed by cooperating baking plates to form the shaped body, and baked at a temperature of 150°C to 200°C with the formation of a stable composite of fiber bundles and starch to obtain the shaped body with a smooth surface.

40. A process according to at least one of the preceding claims 1 to 39, characterized in that the fiber-containing raw material is comminuted and reduced to its fiber structure in the presence of water and that a shapable mass is formed, 15% by weight to 30% by weight of starch, based on the dry weight of the fiber-containing raw material being added to the mass, and the fiber-containing, comminuted raw material is disintegrated into fiber bundles in a mixing and kneading process and converted into a poor-flowing to plastic state and introduced into a baking mold formed by cooperating baking plates to form the shaped body and baked at a temperature of 150°C to 200°C with the formation of a stable composite of fiber bundles and starch to obtain the shaped body with a smooth surface.

41. A process according to claim 39 to 40, characterized in that the duration of the baking process is 1 to 15 minutes, depending upon the composition and the water content of the mass.

42. A process according to at least one of the preceding claims 1 to 41, characterized in that long-fibered fibers or fiber bundles up to a length of 50 mm are used for thick-walled and/or large-surface shaped bodies.

43. A shaped body, in particular, a shaped packaging body, from biodegradable material, consisting of biodegradable fiber material, starch and a residual amount of water, produced in accordance with the process according to at least one of the preceding claims 1 to 42, the ratio of fiber material to starch being 4 : 1 to 1 : 2.

44. A shaped body according to claim 43, characterized in that the shaped body contains a mixture of long- and short-fibered fibers or of loosened fiber bundles with a fiber or fiber bundle length of 0.5 mm to 5 mm.

45. A shaped body according to claim 43 or 44, characterized in that the shaped body contains an amount of pre-gelatinated starch.

46. A shaped body according to at least one of the preceding claims 43 to 45, characterized in that the shaped body contains a mixture of loosened fiber bundles and individual fibers or fiber bundles.

47. A shaped body according to at least one of the preceding claims 43 to 46, characterized in that the shaped body has a stable composite of fiber/fiber bundles and starch.

48. A shaped body according to at least one of the preceding claims 43 to 47, characterized in that the shaped body has a fiber/fiber bundle skeleton, penetrated by a starch matrix.

## Revendications

1. Procédé de fabrication d'articles moulés, en particulier d'articles d'emballage moulés, à partir d'un matériau biodégradable en utilisant un mélange visqueux qui contient un matériau fibreux biodégradable, de l'eau et de l'amidon, et qui est cuit avec formation d'un composite de matériau fibreux et d'amidon dans un moule de cuisson fermé avec une élévation de la pression consécutive à l'évaporation de l'eau, le rapport de l'amidon sur le matériau fibreux dans le mélange visqueux étant dans la plage de 15% en poids à 200% en poids et la cuisson étant effectuée pendant une durée comprise entre 0,5 et 15 minutes à une température de cuisson comprise entre 105°C et 300°C.

2. Procédé selon la revendication 1, caractérisé en ce que l'on utilise pour former le matériau fibreux une matière première contenant des fibres.

3. Procédé selon la revendication 2, caractérisé en ce que la matière première contenant des fibres est du vieux papier, un matériau de recyclage, un matériau fibreux biodégradable.

4. Procédé selon la revendication 1, caractérisé en ce que le matériau fibreux se compose directement de fibres ou de faisceaux de fibres biodégradables.

5. Procédé selon au moins une des revendications 1 à 4 précédentes, caractérisé en ce que l'on utilise comme matériau fibreux un mélange de fibres ou faisceaux de fibres à brins longs et à brins courts avec une longueur des fibres ou faisceaux de fibres dans une plage de 0,5 à 50 mm.

6. Procédé selon au moins une des revendications 1 à 5 précédentes, caractérisé en ce que l'on utilise comme amidon un amidon natif et/ou un amidon pré-encollé.

7. Procédé selon au moins une des revendications 1 à 6 précédentes, caractérisé en ce que le mélange visqueux contient de 30% en poids à 50% en poids d'amidon, ramené au poids sec de la matière première contenant des fibres.

8. Procédé selon au moins une des revendications 1 à 7 précédentes, caractérisé en ce que l'on ajoute pour former le mélange visqueux de l'eau dans une proportion allant jusqu'à environ 8:1, ramené à la masse sechée de la matière première contenant des fibres.

9. Procédé selon au moins une des revendications 1 à 8 précédentes, caractérisé en ce que la quantité d'amidon pré-encollé ou modifié dans la quantité d'amidon totale contenue dans le mélange visqueux est d'environ 30% en poids.

10. Procédé selon au moins une des revendications 1 à 9 précédentes, caractérisé en ce que la proportion de l'amidon par rapport à l'eau dans le mélange visqueux représente de 1:10 à 1:1 et en ce que l'on ajoute ensuite pour former le mélange visqueux de l'eau sous la forme d'amidon modifié ou de l'amidon pré-encollé en présence d'un excès d'eau.

11. Procédé selon au moins une des revendications 1 à 10 précédentes, caractérisé en ce que la proportion du matériau fibreux dans le mélange visqueux est de 15% en poids à 30% en poids, la proportion d'amidon de 5% en poids à 40% en poids, la proportion d'eau de 70% en poids à 40% en poids.

12. Procédé selon la revendication 11, caractérisé en ce que la proportion de l'amidon pré-encollé ou modifié dans le mélange visqueux est de 1% en poids à 10% en poids.

13. Procédé selon au moins une des revendications 2 à 12 précédentes, caractérisé en ce que la matière première contenant des fibres est broyée et ensuite ramenée à sa structure fibreuse en présence d'eau et avec addition d'amidon, et en ce que le mélange visqueux plastique est formé et ensuite cuit.

14. Procédé selon au moins une des revendications 2 à 12 précédentes, caractérisé en ce que la matière première contenant des fibres est broyée en présence d'eau et ensuite ramenée à sa structure fibreuse par addition d'amidon, et en ce que le mélange visqueux plastique est formé et ensuite cuit.

15. Procédé selon au moins une des revendications 2 à 14 précédentes, caractérisé en ce que le retour de la matière première contenant des fibres broyée à une structure de fibres ou faisceaux de fibres se fait dans un processus de mélangeage et de malaxage mettant en jeu des forces de cisaillement internes.

16. Procédé selon au moins une des revendications 1 à 15 précédentes, caractérisé en ce que le mélange visqueux est dosé avant sa cuisson.

17. Procédé selon au moins une des revendications 1 à 16 précédentes, caractérisé en ce que la matière première contenant des fibres ou le matériau fibreux utilisé immédiatement est analysée pour déterminer sa longueur de fibre et sa teneur en amidon et elle est soumise à un classage avant ou après l'opération de broyage.

18. Procédé selon au moins une des revendications 1 à 17 précédentes, caractérisé en ce que l'amidon natif est ajouté en partie dès la phase de broyage de la matière première contenant des fibres.

19. Procédé selon au moins une des revendications 2 à 18 précédentes, caractérisé en ce que l'amidon est ajouté au moins en partie à la matière première contenant des fibres au cours de l'opération de broyage et/ou au cours d'une opération consécutive de mélangeage à sec ou humide et/ou au cours de l'opération consécutive de mélangeage et de malaxage égalisateur sous la forme d'amidon natif et/ou modifié.

20. Procédé selon au moins une des revendications 2 à 19 précédentes, caractérisé en ce que l'amidon est utilisé sous la forme d'amidon pré-encollé et d'amidon natif et en ce que l'on ajoute au moins une matière de charge à l'amidon natif, avant ajout dans le processus de broyage de la matière première contenant des fibres ou dans le processus consécutif de mélangeage et de malaxage égalisateur et ramenant la matière première contenant des fibres à sa structure fibreuse.

21. Procédé selon au moins une des revendications 1 à 20 précédentes, caractérisé en ce que l'amidon pré-encollé est ajouté directement dans le processus de mélangeage et de malaxage afin de former le mélange visqueux.

22. Procédé selon au moins une des revendications 1 à 21 précédentes, caractérisé en ce que le mélange visqueux est formé en utilisant un mélange de fibres et/ou de faisceaux de fibres discrètes à brins courts et à brins longs.

23. Procédé selon au moins une des revendications 2 à 22 précédentes, caractérisé en ce que le mélange visqueux est formé en utilisant une matière première contenant des fibres d'un degré de broyage différent et d'une longueur de fibre différente.

24. Procédé selon au moins une des revendications 2 à 23 précédentes, caractérisé en ce que le broyage et/ou le défibrage de la matière première contenant des fibres se fait sans détérioration des fibres et sans arêtes coupantes sur le dispositif de broyage.

25. Procédé selon la revendication 5, caractérisé en ce que les faisceaux de fibres sont désagrégés lors du défibrage de la matière première contenant des fibres broyée.

26. Procédé selon au moins une des revendications 1 à 25 précédentes, caractérisé en ce que l'on ajoute au mélange visqueux des additifs alcalins en tant qu'agents de fluxage.

27. Procédé selon au moins une des revendications 1 à 26 précédentes, caractérisé en ce que l'on porte le mélange visqueux à un état pâteux, on le lamine à une épaisseur sensiblement égale à l'épaisseur de paroi de l'article moulé, on poinçonne des ébauches et on introduit ces ébauches dans le moule de cuisson.

28. Procédé selon au moins une des revendications 1 à 27 précédentes, caractérisé en ce que l'on remplit un moule de cuisson formé d'au moins un plateau chauffant supérieur et d'un plateau chauffant inférieur avec une quantité dosée du mélange et on préforme le mélange introduit dans le moule de cuisson à l'aide du plateau chauffant supérieur ou d'un piston.

29. Procédé selon au moins une des revendications 1 à 28 précédentes, caractérisé en ce que le moule de cuisson est chauffé avant l'introduction du mélange dans celui-ci.

30. Procédé selon au moins une des revendications 1 à 29 précédentes, caractérisé en ce que, avant le début de la cuisson par fermeture et verrouillage des plateaux chauffants du moule de cuisson, on laisse le plateau chauffant supérieur reposer librement sur le mélange introduit pendant une durée prédéterminée et on diminue la teneur en eau du mélange par évaporation.

31. Procédé selon au moins une des revendications 28 à 30 précédentes, caractérisé en ce que l'on verrouille l'un par rapport à l'autre au moins deux plateaux chauffants du moule de cuisson au début de l'opération de cuisson en garantissant une distance constante entre les plateaux chauffants supérieur et inférieur pendant le processus de cuisson, la distance entre les surfaces intérieures des plateaux chauffants qui se font face et entre lesquelles se trouve le mélange déterminant une épaisseur de paroi de l'article moulé cuit.

32. Procédé selon au moins une des revendications 1 à 31 précédentes, caractérisé en ce qu'il se produit pendant l'opération de cuisson une évacuation contrôlée de la vapeur d'eau hors du moule de cuisson.

33. Procédé selon la revendication 32, caractérisé en ce que l'évacuation de la vapeur d'eau hors de la cavité du moule de cuisson est commandée dans le temps et/ou localement et/ou commandée par la pression interne.

34. Procédé selon au moins une des revendications 30 à 33 précédentes, caractérisé en ce que, après fermeture et verrouillage des plateaux chauffants du moule de cuisson au début de l'opération de cuisson, le mélange visqueux présent dans le moule de cuisson est maintenu sous pression.

35. Procédé selon au moins une des revendications 1 à 34 précédentes, caractérisé en ce que la teneur en eau du mélange visqueux est réduite avant le processus de cuisson.

36. Procédé selon la revendication 35, caractérisé en ce que le mélange est placé avant introduction dans le moule de cuisson dans un moule perforé correspondant sensiblement à la géométrie de la cavité du moule de cuisson et chargé au moyen d'un poinçon approprié et le mélange préformé sous la forme d'une ébauche est retiré du moule perforé après avoir atteint le degré prévu de réduction de la teneur en eau et introduit dans le moule de cuisson.

37. Procédé selon la revendication 36, caractérisé en ce que l'ébauche préformée introduite dans le moule de cuisson est soumise avant fermeture et verrouillage des plateaux chauffants du moule de cuisson à un processus d'évaporation par application du plateau supérieur chauffé sur l'ébauche.

38. Procédé selon au moins une des revendications 1 à 37 précédentes, caractérisé en ce que le processus de cuisson se fait en diminuant la distance entre les plateaux chauffants supérieur et inférieur du moule de cuisson.

39. Procédé selon au moins une des revendications 1 à 38 précédentes, caractérisé en ce que la matière première contenant des fibres est broyée et ramenée à sa structure fibreuse en présence d'eau et en ce ou'un mélange moulable est formé, de 30% en poids à 50% en poids d'amidon ramené au poids sec de la matière première contenant des fibres étant ajoutés au mélange, et la matière première contenant des fibres broyée est désagrégée en faisceaux de fibres dans une opération de mélangeage et de malaxage et transformée en un état allant de visqueux à plastique, puis elle est introduite dans un moule de cuisson formé de plateaux chauffants agissant ensemble afin de former l'article moulé et cuite à une température de 150°C à 200°C avec formation d'un composite stable de faisceaux de fibres et d'amidon afin d'obtenir un article moulé ayant une surface lisse.

40. Procédé selon au moins une des revendications 1 à 39 précédentes, caractérisé en ce que la matière première contenant des fibres est broyée et ramenée à sa structure fibreuse en présence d'eau et en ce ou'un mélange moulable est formé, de 15% en poids à 30% en poids d'amidon ramené au poids sec de la matière première contenant des fibres étant ajoutés au mélange, et la matière première contenant des fibres broyée est désagrégée en faisceaux de fibres dans une opération de mélangeage et de malaxage et transformée en un état allant de visqueux à plastique, puis elle est introduite dans un moule de cuisson formé de plateaux chauffants agissant ensemble afin de former l'article moulé et cuite à une température de 150°C à 200°C avec formation d'un composite stable de faisceaux de fibres et d'amidon afin d'obtenir un article moulé ayant une surface lisse.

41. Procédé selon la revendication 39 ou la revendication 40, caractérisé en ce que la durée de l'opération de cuisson est de 1 à 15 minutes en fonction de la composition et de la teneur en eau du mélange.

42. Procédé selon au moins une des revendications 1 à 41 précédentes, caractérisé en ce que l'on utilise pour des articles moulés à paroi épaisse et/ou ayant une grande surface des fibres ou faisceaux de fibres à brins longs d'une longueur allant jusqu'à 50 mm.

43. Article moulé, en particulier article d'emballage moulé, obtenu à partir d'un matériau biodégradable composé de matériau fibreux biodégradable, d'amidon et d'une quantité résiduelle d'eau, fabriqué par le procédé selon l'une au moins des revendications 1 à 42 précédentes, la proportion du matériau fibreux par rapport à l'amidon étant de 4:1 à 1:2.

44. Article moulé selon la revendication 43, caractérisé en ce que l'article moulé contient un mélange de fibres ou de faisceaux de fibres à brins longs et à brins courts ou bien de faisceaux de fibres désagrégés avec une longueur des fibres ou faisceaux de fibres comprise entre 0,5 mm et 5 mm.

45. Article moulé selon la revendication 43 ou la revendication 44, caractérisé en ce que l'article moulé contient une quantité d'amidon pré-encollé.

46. Article moulé selon au moins une des revendications 43 à 45 précédentes, caractérisé en ce que l'article moulé contient des faisceaux de fibres désagrégés et des fibres discrètes ou des faisceaux de fibres.

47. Article moulé selon au moins une des revendications 43 à 46 précédentes, caractérisé en ce que l'article moulé présente un composite stable de fibres/faisceaux de fibres et d'amidon.

48. Article moulé selon au moins une des revendications 43 à 47 précédentes, caractérisé en ce que l'article moulé présente une ossature de fibres/faisceaux de fibres traversée par une matrice d'amidon.
